(19) Europäisches Patentamt

European Patent Office

Office européen des brevets

(11) **EP 3 542 072 B1**

(12) **FASCICULE DE BREVET EUROPEEN**

(45) Date de publication et mention de la délivrance du brevet:
**09.12.2020 Bulletin 2020/50**

(21) Numéro de dépôt: **17803902.0**

(22) Date de dépôt: **21.11.2017**

(51) Int Cl.:
*F16B 2/08* (2006.01)     *F16B 2/10* (2006.01)
*F16B 2/12* (2006.01)     *B25B 5/14* (2006.01)
*B63C 11/52* (2006.01)

(86) Numéro de dépôt international:
**PCT/EP2017/079916**

(87) Numéro de publication internationale:
**WO 2018/091737 (24.05.2018 Gazette 2018/21)**

(54) **PINCE D'ACCROCHAGE D'UN DISPOSITIF SUR UNE LIGNE DE PRODUCTION AU MOINS PARTIELLEMENT IMMERGÉE DANS UNE ÉTENDUE D'EAU, DISPOSITIF MOBILE ET PROCÉDÉ ASSOCIÉ**

GREIFER EINER VORRICHTUNG AUF EINER PRODUKTIONSLINIE, DIE ZUMINDEST TEILWEISE IN EINEM GEWÄSSER EINGETAUCHT IST, MOBILE VORRICHTUNG UND ZUGEHÖRIGES VERFAHREN

GRIPPER OF A DEVICE ON A PRODUCTION LINE AT LEAST PARTIALLY SUBMERGED IN A BODY OF WATER, MOBILE DEVICE AND ASSOCIATED METHOD

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **21.11.2016 FR 1661291**

(43) Date de publication de la demande:
**25.09.2019 Bulletin 2019/39**

(73) Titulaire: **TECHNIP N-POWER**
**92400 Courbevoie (FR)**

(72) Inventeurs:
• **ESPINASSE, Philippe**
**76420 Bihorel (FR)**

• **ROUTEAU, Sylvain**
**92210 Saint Cloud (FR)**
• **BERNARD, Olivier**
**13790 Rousset (FR)**
• **LAUZIER, Cédric**
**13013 Marseille (FR)**
• **GAGEONNET, Olivier**
**78600 Maisons Laffitte (FR)**

(74) Mandataire: **Lavoix**
**2, place d'Estienne d'Orves**
**75441 Paris Cedex 09 (FR)**

(56) Documents cités:
**US-A- 4 832 530     US-A- 5 186 755**

**Description**

La présente invention concerne une pince d'accrochage d'un dispositif sur une ligne de production au moins partiellement immergée dans une étendue d'eau, selon le préambule de la revendication 1.

Une telle pince est destinée à être utilisée dans un dispositif d'inspection d'une ligne de production dans une installation d'exploitation de fluide, notamment d'hydrocarbures.

La ligne de production est par exemple une conduite flexible (notamment telle que décrite dans les documents normatifs publiés par l'American Petroleum Institute (API), API 17J, 3ème édition - 1er janvier 2009 et API RP 17B, 3ème édition - mars 2002). En variante, la ligne de production est un ombilical, ou encore une conduite rigide.

De telles lignes de production sont utilisées notamment en mer profonde dans l'industrie pétrolière et gazière, et s'étendent généralement à travers une étendue d'eau entre une installation de surface et un ensemble de fond. Ces lignes de production peuvent également s'étendre entre deux installations de surface.

Ces lignes de production, et en particulier les conduites flexibles, sont généralement munies d'armures qui assurent leur tenue en traction axiale. Les armures sont protégées extérieurement par une gaine externe en matériau polymère qui empêche l'eau salée de l'étendue d'eau de pénétrer au contact des armures. Cependant, si la gaine externe se dégrade et/ou se perce, les armures sont susceptibles d'entrer en contact avec de l'eau salée, pouvant conduire à une corrosion accélérée.

En outre, dans le cas des conduites flexibles, une gaine de pression en polymère disposée sous les armures délimite de manière étanche un passage intérieur de circulation du fluide. Néanmoins, certains composés acides contenus dans le fluide sont susceptibles de diffuser à travers la gaine de pression et de pénétrer dans l'espace annulaire entre la gaine de pression et la gaine externe, dans lequel se trouvent les armures, favorisant également la corrosion.

Les conduites précitées subissent en outre des efforts très élevés en traction axiale, notamment lorsque l'étendue d'eau dans laquelle est disposée la conduite est très profonde.

Dans ce cas, la partie supérieure de la conduite au voisinage de l'ensemble de surface reprend une tension axiale très importante, qui peut atteindre plusieurs centaines de tonnes.

La tension axiale présente non seulement une valeur moyenne élevée, mais aussi des variations permanentes en fonction des mouvements verticaux de l'ensemble de surface et de la conduite, sous l'effet de l'agitation de l'étendue d'eau provoquée par la houle ou par les vagues.

Les variations de tension axiale peuvent atteindre plusieurs dizaines de tonnes et se répéter continuellement durant la durée de service de la conduite. En 20 ans, le nombre de cycles peut ainsi atteindre plus de 100 millions.

Au cours du temps, les armures sont donc soumises à des phénomènes de fatigue résultant notamment de la corrosion et des contraintes mécaniques s'appliquant sur la conduite.

Ces phénomènes, ainsi que d'autres événements, peuvent dans certains cas conduire à une dégradation des propriétés de la conduite au cours du temps, notamment après plusieurs années d'utilisation.

À cet effet, pour vérifier l'intégrité de la conduite, il est connu d'effectuer une inspection sur site de la conduite en utilisant un dispositif se déplaçant sur la conduite. Cette opération, limitée dans le temps, inclut avantageusement une inspection visuelle et éventuellement des mesures incluant une échographie, une détermination des flux magnétiques sortant de la conduite, et/ou une détermination des courants de Foucault détectables à la surface de la conduite.

Cette détermination implique de placer les capteurs de mesure au plus près de la surface extérieure de la conduite et de les déplacer régulièrement.

Aux faibles profondeurs, des plongeurs peuvent effectuer ce type d'inspections.

Pour les plus grandes profondeurs, un dispositif du type précité destiné à effectuer une inspection vidéo, ultrasonore et par rayons X est décrit par exemple dans WO2010/105003.

Pour sa mise en place, le dispositif est immergé à une profondeur de plusieurs dizaines de mètres sous la surface, puis est accroché sur la ligne de production par l'intermédiaire d'un robot télécommandé. Le dispositif se déplace alors sur la ligne de production, dans l'étendue d'eau, pour effectuer une campagne de mesure.

Le dispositif suit la courbure de la ligne de production grâce à une surface de contact très réduite formée par deux jeux de roues éloignées et un jeu fonctionnel entre les roues et la ligne de production. La précision de positionnement entre le dispositif et la ligne de production est suffisante pour une inspection par vidéo comme décrit dans WO2010/105003.

Un tel dispositif ne donne cependant pas entière satisfaction pour des mesures nécessitant une précision accrue, notamment pour effectuer des mesures d'intégrité de la ligne de production.

En outre le dispositif décrit dans WO2010/105003 descend le long de la ligne de production par gravité grâce à des lests et remonte par lâchage des lests. Il est donc difficile de faire des aller-retours à certains endroits de la ligne de production pour en faire une inspection plus minutieuse.

US4832530 décrit un dispositif de pose d'un tube, comprenant des organes de saisie du tube.

Un but de l'invention est donc de fournir une pince pour un dispositif d'inspection qui permette une inspection minutieuse de la surface extérieure d'une ligne de production partiellement immergée dans une étendue d'eau, sur toute la longueur de la ligne de production, le dispositif étant simple à manipuler et à opérer.

A cet effet, l'invention a pour objet une pince selon la revendication 1.

La pince selon l'invention peut comprendre l'une ou plusieurs des caractéristiques des revendications 2 à 13 ou la caractéristique suivante, prise(s) isolément ou suivant toute combinaison techniquement possible :

- les patins sont propres à se rapprocher latéralement l'un de l'autre lors du passage de la ceinture de la configuration desserrée à la configuration de serrage, au moins un patin comportant un organe de guidage latéral du patin par rapport à au moins un patin adjacent, le patin adjacent définissant un logement de réception de l'organe de guidage latéral.

L'invention a également pour objet un dispositif mobile d'inspection d'une ligne de production destinée à être immergée au moins partiellement dans une étendue d'eau, selon la revendication 13.

L'invention a également pour objet un procédé d'inspection d'une ligne de production partiellement immergée dans une étendue d'eau, selon la revendication 14.

L'invention sera mieux comprise à la lecture de la description qui va suivre, donnée uniquement à titre d'exemple, et faite en se référant aux dessins annexés, sur lesquels :

- la figure 1 est une vue schématique de la partie supérieure d'une première installation d'exploitation de fluide comportant une ligne de production flexible et un dispositif mobile d'inspection selon l'invention, disposé dans d'une zone d'éclaboussement ;
- les figures 2 et 3 sont des vues de côté du dispositif de la figure 1, les pinces du dispositif étant respectivement écartées et rapprochées l'une de l'autre ;
- la figure 4 est une vue de dessus du support d'inspection comprenant une pluralité de capteurs propres à se placer en regard de la ligne de production ;
- la figure 5 est une vue d'un détail de la figure 4 ;
- la figure 6 est une vue en élévation d'un mécanisme d'inclinaison relative d'une pince par rapport à l'autre ;
- la figure 7 est une vue de dessous d'un détail du mécanisme de la figure 6 ;
- les figures 8 à 10 illustrent diverses configurations d'inclinaison des pinces du dispositif l'une par rapport à l'autre à l'aide du mécanisme de la figure 6 ;
- la figure 11 est une vue en perspective de trois-quarts face d'une pince du dispositif de la figure 1, la pince étant fermée ;
- la figure 12 est une vue de dessus de la pince de la figure 11, la pince étant ouverte ;
- les figures 13 et 14 sont des vues analogues à la figure 11 et à la figure 12 ;
- la figure 15 est une vue en perspective d'un patin de serrage de la pince de la figure 11 ;
- la figure 16 est une vue de dessus d'un actionneur de serrage de la pince de la figure 11, dans une configuration écartée d'un point d'accroche ;
- la figure 17 est une vue analogue à la figure 16, dans une configuration de saisie du point d'accroche ;
- les figures 18 à 19 sont des vues illustrant un actionneur additionnel d'écartement de la bande ;
- la figure 20 est une vue analogue à la figure 17 d'un autre actionneur additionnel d'écartement de la bande ;

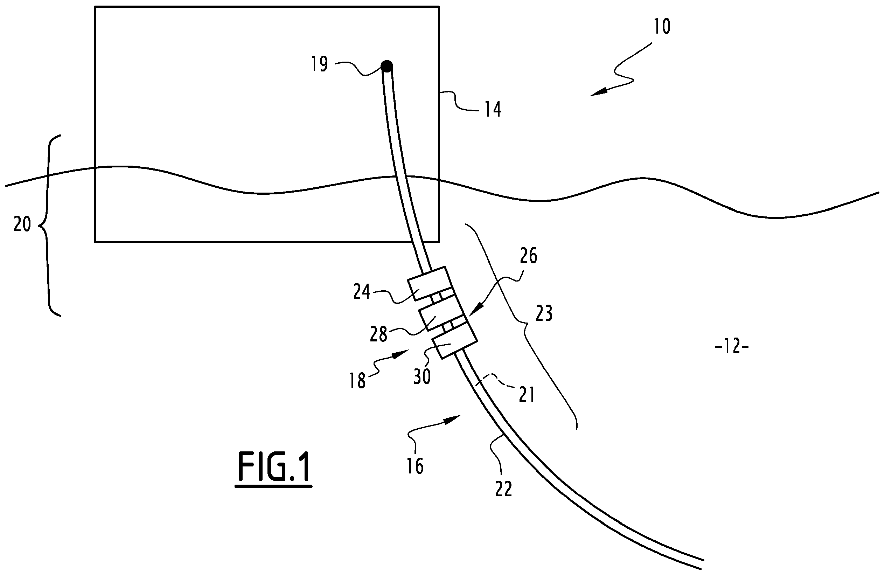

Une première installation 10 d'exploitation de fluide dans une étendue d'eau 12 est illustrée partiellement sur la figure 1.

L'étendue d'eau 12 est par exemple un lac, une mer ou un océan. La profondeur de l'étendue d'eau 12 au droit de l'installation 10 est par exemple comprise entre 50 m et 3000 m, voire 4000 m.

L'installation 10 comporte un ensemble de surface 14 et un ensemble de fond (non représenté) ou deux ensembles de surface 14, et au moins une ligne de production 16 partiellement immergée dans l'étendue d'eau 12 à partir de l'ensemble de surface 14.

On entend par « ligne de production », une ligne installée entre l'ensemble de surface 14 et l'ensemble de fond et capable de véhiculer un fluide, et qu'il convient de distinguer d'une ligne de construction non encore installée. En effet, il existe une différence majeure entre ces deux types de ligne, une dégradation de la ligne de production pouvant engendrer des désastres humains, matériels et écologiques important. En effet, le fluide de production, à savoir du pétrole brut et/ou du gaz brut, circulant généralement dans la ligne de production est inflammable et sous pression. Un endommagement de la conduite peut entraîner un incendie ou une explosion et également la contamination du milieu environnant. Par opposition, si un dommage intervient sur une ligne de construction, par exemple pendant l'installation, il est encore possible de la changer sans que ne se produise d'autres dommages que des dommages économiques. Les conditions d'accroche d'un dispositif sur une ligne de production sont donc beaucoup plus critiques que sur une ligne de construction.

L'installation 10 comprend en outre, selon l'invention, un dispositif d'inspection mobile 18 destiné à s'accrocher de manière réversible et à se déplacer sur la ligne de production 16 pour inspecter ladite ligne de production 16.

L'ensemble de surface 14 est par exemple flottant. Il est avantageusement formé par un support naval de surface pouvant être par exemple une unité flottante de production, de stockage et de déchargement appelée FPSO (« Floating Production, Storage and Offloading » en langue anglaise) ou une unité flottante dédiée au gaz naturel liquéfié appelée FLNG (« Floating Liquified Natural Gas » en langue anglaise), une plate-forme semi-submersible, pouvant être par exemple un TLP (« Tension Leg Platform » en langue anglaise), une bouée de déchargement, une colonne verticale flottante ou un navire. En variante, l'ensemble de surface 14 est une structure rigide fixe de type « jacket » ou une structure oscillante assujettie au fond de la mer.

Dans cet exemple, la ligne de production 16 raccorde l'ensemble de fond à un point supérieur 19 sur l'ensemble de surface 14. La ligne de production 16 est donc partiellement immergée dans l'étendue d'eau 12 et présente un tronçon supérieur disposé dans un volume d'air, en traversant une zone d'éclaboussement 20. Cette zone d'éclaboussement 20 s'étend par exemple jusqu'à une profondeur d'environ 5 m avec des conditions de mer favorables. Des courants générés par le transport de masse induit par la houle sont ensuite présents au-delà de la zone d'éclaboussement jusqu'à une profondeur d'environ 50 m.

La ligne de production 16 est alors une colonne montante (désignée par le terme anglais « riser »).

Une variante consiste en une ligne de production 16 partiellement immergée dans l'étendue d'eau 12 et raccordant par exemple deux ensembles de surface 14 (typiquement une bouée de déchargement et un FPSO). Ceci est notamment le cas des lignes de production du type OOL (« Oil Offloading Line » en langue anglaise).

La ligne de production 16 est ici une ligne flexible. Dans l'exemple représenté sur la figure 1, la ligne de production 16 est une conduite flexible destinée à transporter un fluide, notamment des hydrocarbures. Elle délimite ainsi une lumière centrale 21 de circulation de fluide. Une telle conduite est par exemple décrite dans les documents normatifs publiés par l'American Petroleum Institute (API), API 17J (3ème édition - 1er janvier 2009) et API RP 17B (3ème édition - mars 2002). Elle comporte une gaine interne confinant le fluide dans la lumière centrale, au moins une couche d'armures de traction, et une gaine externe sur laquelle le dispositif mobile d'inspection 18 s'accroche et se déplace.

En variante, comme précisé plus haut, la ligne de production 16 est un ombilical. Un ombilical est une ligne de production telle que définie dans les documents normatifs publiés par l'American Petroleum Institute (API), API 17E (4ème édition - avril 2011). L'ombilical comprend une gaine externe contenant au moins un lien fonctionnel tel qu'un câble électrique, un câble à fibres optiques ou/et une ligne hydraulique ou des faisceaux de liens fonctionnels maintenus dans une gaine.

En variante encore, la ligne de production 16 est une conduite rigide. Elle comprend alors au moins un tube métallique délimitant une lumière centrale 21. Le tube métallique est formé d'un seul tenant ou est formé d'un assemblage de segments de tube soudés bout à bout.

Dans une autre variante, la ligne de production 16 est un assemblage (« bundle » en anglais) de colonnes montantes rigides, reliées entre elles par l'intermédiaire d'entretoises (« spacers » en anglais) pour éviter qu'elles ne s'entrechoquent dans leurs mouvements latéraux dans l'eau.

La ligne de production 16 définit une surface extérieure 22 sur laquelle s'accroche et se déplace le dispositif mobile d'inspection 18. Elle comporte éventuellement au moins une région incurvée 23 destinée à être inspectée par le dispositif mobile d'inspection 18.

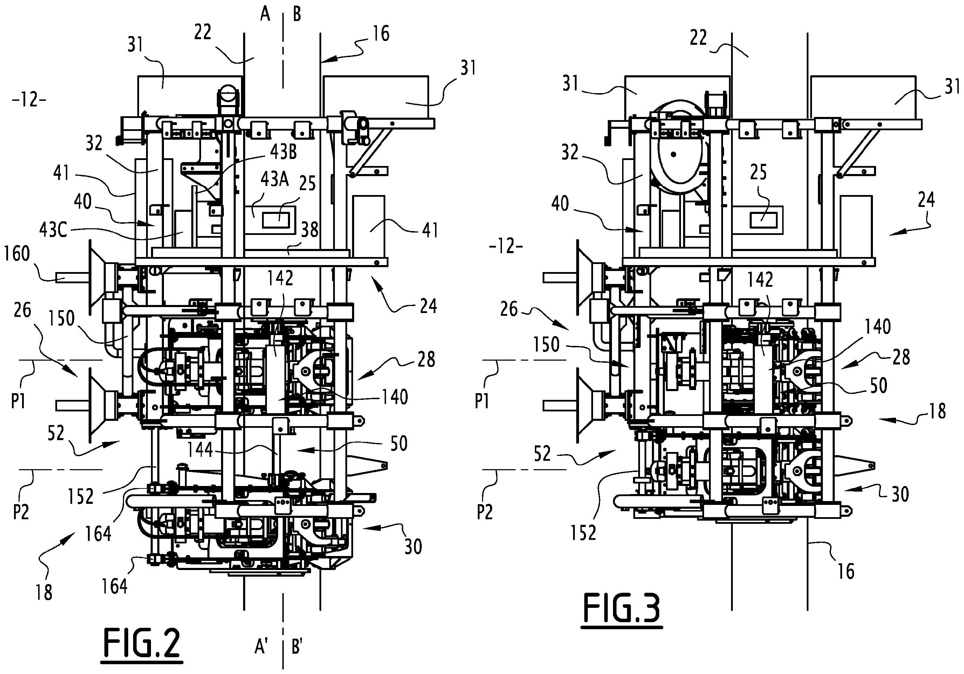

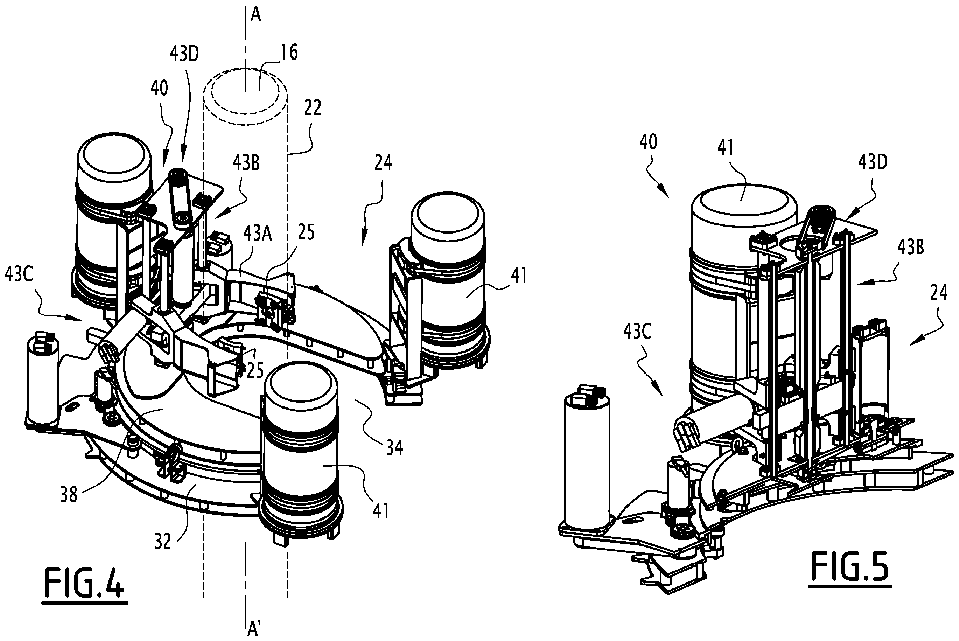

En référence aux figures 2 à 4, le dispositif mobile d'inspection 18 comporte un support d'inspection 24 portant des capteurs 25, visible notamment sur les figures 3 et 4, et un ensemble 26 d'accrochage et de déplacement sur la ligne de production 16, comportant deux pinces 28, 30 d'accrochage. Le dispositif mobile d'inspection 18 comporte en outre au moins un flotteur 31 représenté schématiquement sur la figure 3.

Le support d'inspection 24 comporte un cadre 32 définissant une ouverture 34 en U, un plateau tournant 38, portant la pluralité de capteurs 25, et un mécanisme 40 de déplacement de chaque capteur 25 vers la ligne de production 16. Il comporte avantageusement des caissons étanches 41 de réception d'une électronique de pilotage des capteurs 25.

Le cadre 32 est destiné à s'étendre perpendiculairement à l'axe local de la ligne de production 16 autour d'une partie centrale de l'ouverture 34, d'axe A-A', propre à recevoir la ligne de production 16. L'ouverture 34 débouche latéralement vers l'extérieur sur toute la hauteur du cadre 32, pour permettre la mise en place et le retrait du support d'inspection 24 autour de la ligne de production 16.

Le cadre 32 est réalisé en métal. Il présente un encombrement pouvant varier de 700 mm à 1500 mm en largeur et en profondeur et entre 1000 mm et 2000 mm en hauteur.

Le plateau tournant 38 est monté rotatif autour de l'axe A-A'. Il est propre à faire tourner les capteurs 25 autour de l'axe local de la ligne de production 16 pour les orienter angulairement par rapport à la ligne de production 16.

Le mécanisme de déplacement 40 comprend ici des bras 43A de placage des capteurs 25 contre la surface extérieure 22, un guide 43B de déplacement longitudinal des bras de placage 43A le long de la ligne de production 16, et un dispositif d'actionnement 43C, propre à déplacer les bras de placage 43A radialement vers l'axe A-A'.

Le mécanisme de déplacement 40 comprend également un dispositif d'actionnement 43D propre à déplacer les bras de placage 43A le long du guide de déplacement longitudinal 43B et parallèlement à l'axe A-A'.

Les capteurs 25 sont des capteurs non destructifs. Ils comportent par exemple un capteur ultrasons, un capteur de détection du champ magnétique (magnétomètres), un capteur de tomographie à rayon X, un capteur d'ondes guidées, un capteur de détection de photons X (« Flat Panel Detector » en anglais) et/ou un capteur à détection de courants de Foucault.

Le capteur ultrasons est destiné à réaliser une inspection par échographie du type de celle décrit dans la demande de brevet FR3031186. Il s'applique sur la surface extérieure 22 de la ligne de production 16. Le signal émis par le capteur est transmis dans la ligne de production 16 à travers la paroi externe et l'analyse du signal réfléchi permet notamment de déterminer des informations sur l'épaisseur de la paroi externe, voire sur le contenu situé à l'intérieur de la paroi externe.

Le capteur de détection du champ magnétique est propre à effectuer une analyse de fuite de flux magnétique (« magnetic flux leakage » en anglais ou MFL). Le capteur comporte un électroaimant apte à générer un champ magnétique de manière à magnétiser le composant à tester. En présence de défauts de surface résultant notamment de phénomène de corrosion, érosion ou fissuration, le champ magnétique fuit et est détecté par le capteur. Ce capteur peut par exemple être un capteur de champ magnétique de type capteur à effet Hall. Une telle méthode s'applique essentiellement aux matériaux ferromagnétiques.

Le détecteur de rayonnement X permet d'enregistrer le rayonnement transmis après la traversée d'un objet. Les données acquises lors de la prise de mesure peuvent être collectées selon des orientations multiples. A l'aide de ces prises de mesures, une image numérique peut être calculée et reconstruite mathématiquement, suivant le principe de la tomographie à rayons X. Cette technique permet d'accéder au cœur de la matière pour en apprécier les variations d'absorptions radiologiques et les différences de composition. Elle permet également de localiser très finement toute hétérogénéité, singularité présents dans un objet, ainsi que de vérifier l'assemblage et le positionnement des ensembles mécaniques complexes.

Le capteur de détection de photons X comporte une source de rayonnement X configurée pour émettre des photons X destinés à interagir avec la ligne de production 16 inspectée. Cette source de rayonnement X est avantageusement une source de haute énergie, préférentiellement supérieure à 2 MeV. Le capteur de détection de photons X comporte également un récepteur de photons X configuré pour collecter les photons X émis par la source après interaction avec la ligne de production 16 à inspecter. Le capteur de détection de photons X est préférentiellement un capteur à écran plat (« flat panel » en anglais).

Le capteur d'onde guidée est propre à inspecter à distance, jusqu'à plusieurs dizaines de mètres, dans des zones difficiles d'accès voir même inaccessibles, l'intégrité mécanique des différents éléments constituants la ligne de production 16 inspectée.

Le capteur de détection des courants de Foucault (« eddy current testing » en anglais ou ECT) est propre à mesurer l'impédance absolue ou relative d'un détecteur qui comprend une bobine conductrice dans laquelle un courant alternatif circule. Cette méthode permet de détecter des défauts de surface et des défauts proches de la surface, lorsque la localisation et l'orientation des défauts probables est connue préalablement.

Étant donné la très faible surface (généralement de l'ordre de quelques mm$^2$) de sensibilité des capteurs ultrasons, de flux de fuite et de courants de Foucault, le contrôle intégral de la surface 22 impose un balayage de toute la surface 22 de la ligne de production 16 à examiner. Le nombre de capteurs destinés à mesurer la même grandeur physique est donc généralement supérieur ou égal à 2.

Une vitesse de balayage élevée peut être mise en œuvre pour obtenir une vitesse d'examen industriellement satisfaisante.

Le balayage de toute la surface de la ligne de production 16 est réalisé par le plateau tournant 38 et les dispositifs d'actionnement 43C et 43D. La vitesse de balayage peut atteindre 150 mm/s sur chacun des deux axes.

Les équipements du support d'inspection 24 sont étanches, indépendamment les uns des autres. En particulier, le support d'inspection 24 comprend un vérin 43C et deux moteurs sans balais (« brushless » en langue anglais) pour le plateau tournant 38 et le système de déplacement vertical 43D des capteurs 25. Les systèmes de contrôle/commande de ces moteurs sont contenus dans un caisson étanche.

Dans un exemple de réalisation, les masses suivantes peuvent être obtenues :

- masse d'un caisson : 40kg le dispositif d'inspection 18 pouvant en comprendre plusieurs,
- masse du module translation : 75 kg
- masse du plateau tournant 38 : 86 kg et 46 kg guide plateau fixe
- masse de la motorisation du plateau tournant 38 : 26 kg
- masse du cadre 32 : 430 kg.

Chaque capteur 25 est déplaçable radialement vers l'axe A-A' par l'intermédiaire du mécanisme de déplacement 40 entre une position escamotée de repos et une position déployée radialement vers la ligne de production 16, avantageusement au contact de la ligne de production 16. Chaque capteur 25 est en outre déplaçable le long de l'axe A-A'.

Chaque flotteur 31 est par exemple formé de mousse, en particulier de mousse en PVC, ou d'un réservoir en métal, notamment en acier.

Dans un exemple, le volume total des flotteurs 31 est supérieur à 1000 litres, par exemple 1600 litres, pour assurer une masse maximale de 50 kg dans l'étendue d'eau 12. Ceci facilite la liaison avec un véhicule télécommandé (« remotely operated vehicle » ou « ROV » en anglais). Cette masse est de l'ordre de 300 kg dans un volume d'air lorsque le dispositif est destiné à opéré jusqu'à des profondeurs de 2000m et est de l'ordre de 600 kg lorsque le dispositif est destiné à opéré jusqu'à des profondeurs de 4000m.

Le dispositif mobile d'inspection 18 peut également comporter un ou plusieurs modules de nettoyage (non représentés) de la ligne de production 16 avant inspection. En effet, au cours du temps, des salissures peuvent se déposer sur la ligne de production 16, par exemple des algues, mollusques, ou autres généralement regroupés sous le terme de concrétion marine. Le ou les modules de nettoyage peuvent notamment comporter une ou plusieurs buses couplées à une ou plusieurs pompes pour projeter contre la ligne de production 16 un ou des jets haute-pression par exemple d'eau douce, mais potentiellement d'eau de mer directement aspirée sur place.

Le ou les modules de nettoyage peuvent alternativement ou en combinaison comporter une ou plusieurs buses couplées à une ou plusieurs pompes marines pour projeter à la surface de la ligne de production 16 un ou des jets de cavitation par exemple d'eau douce, mais préférentiellement d'eau de mer.

Le ou les modules de nettoyage peuvent également ou alternativement comporter des brosses tournantes destinées à brosser la ligne de production 16.

Un ou plusieurs modules de nettoyage peuvent être agencés en amont et/ou en aval du support d'inspection 24.

Le ou les modules de nettoyage peuvent comporter un ou plusieurs déflecteurs agencés en amont et/ou en aval du support d'inspection 24, ledit ou lesdits déflecteurs étant configurés pour éloigner les salissures décollées de la ligne de production 16 des capteurs 25 afin d'éviter toute interférence dans la prise de mesure.

De manière générale, la masse totale du dispositif mobile d'inspection 18 varie selon que le dispositif embarque un ou plusieurs capteurs 25 et un ou plusieurs modules de nettoyage. La masse totale du dispositif mobile d'inspection 18 est en pratique inférieure à 3000 kg, préférablement inférieure à 2000 kg.

Dans l'exemple représenté sur les figures 2 et 3, l'ensemble d'accrochage et de déplacement 26 comporte une première pince supérieure 28, montée fixe par rapport au support d'inspection 24, une deuxième pince inférieure 30, montée mobile par rapport à la première pince 28, et un mécanisme 50 de déplacement longitudinal des pinces 28, 30 l'une par rapport à l'autre. Selon l'invention, l'ensemble d'accrochage et de déplacement 26 comporte en outre un mécanisme 52 d'inclinaison des pinces 28, 30 l'une par rapport à l'autre.

Chaque pince 28, 30 est propre à sélectivement enserrer la ligne de production 16. Selon l'invention, chaque pince 28, 30 enserrant la ligne de production 16 est propre à porter individuellement le dispositif mobile d'inspection 18 pour qu'il évolue à la fois dans l'étendue d'eau 12, à la surface de l'étendue d'eau 12 dans la zone d'éclaboussement 20, et hors de l'étendue d'eau 12, en reprenant le poids du dispositif mobile d'inspection 18.

À cet effet, chaque pince 28, 30 est propre à appliquer une pression de serrage sur la ligne de production 16. On entend par pression de serrage, la moyenne des pressions locales appliquées par la pince 28, 30 sur la surface de contact entre ladite pince et la ligne de production 16.

Par mesure de simplification, une pression de serrage nominale est préférentiellement calculée. On entend par pression de serrage nominale, la moyenne des pressions locales appliquées par la pince 28, 30 sur une surface globale Sm correspondant au périmètre extérieur de la ligne de production 16 multiplié par la longueur de contact de la pince 28, 30 avec la ligne de production 16.

Cette longueur de contact sera notamment décrite de manière plus précise dans la suite de la description.

Ainsi, chaque pince 28, 30 est propre à appliquer une pression de serrage nominale comprise généralement entre 2 bar et 90 bar, et comprise avantageusement entre 2 bar et 40 bar. De manière préférentielle, et afin que dispositif mobile d'inspection 18 puisse s'adapter et évoluer sur un grand nombre de lignes de production 16 différentes, notamment s'adapter et évoluer sur des conduites flexibles, tout en respectant les normes les plus conservatives, chaque pince 28, 30 est propre à appliquer une pression de serrage nominale comprise entre 10 bar et 40 bar.

La pression de serrage nominale appliquée sur la ligne de production 16 par chaque pince 28, 30 est de préférence inférieure à 80 bar pour limiter les risques d'endommagement de la ligne de production 16.

En pratique la pression de serrage peut être mesurée au moyen d'un capteur de pression matriciel. Le capteur de pression matriciel peut par exemple être capacitif. Le capteur de pression matriciel se présente généralement sous la forme d'un film souple comportant un réseau de capteurs de pression formant un maillage dudit film souple et apte à fournir une information sur la pression appliquée en chaque point du maillage. Le capteur de pression matriciel est agencé sur tout le pourtour de la ligne de production 16, ou d'un gabarit cylindrique de même diamètre que ladite ligne de production, entre ladite ligne de production, ou ledit gabarit, et une pince 28, 30. La pince 28, 30 est ensuite actionnée de manière à enserrer la ligne de production 16, ou le gabarit, et ainsi appliquer une pression sur le capteur de pression matriciel. Le capteur de pression matriciel mesure alors en chaque point du maillage la pression appliquée par la pince 28, 30. La pince 28, 30 est ensuite desserrée de la ligne de production 16, ou du gabarit, de manière à libérer le capteur de pression matriciel. Il est ensuite possible via un traitement logiciel de moyenner l'ensemble des pressions mesurées sur la surface globale de manière à déterminer la pression de serrage nominale, etc.

L'effort de serrage appliqué par chaque pince 28, 30 est généralement compris entre 20 kN et 1000 kN, préférentiellement entre 40 kN et 700 kN. En pratique, l'effort de serrage appliqué par chaque pince 28, 30 est avantageusement compris entre 50 kN et 200 kN pour permettre l'inspection des conduites rigides et des ombilicaux et avantageusement entre 130 kN et 700kN pour permettre l'inspection aussi bien des conduites flexibles que des conduites rigides et des ombilicaux.

L'effort de serrage peut être mesuré par le capteur de pression matriciel précédemment décrit, en utilisant un traitement logiciel permettant d'intégrer l'ensemble des pressions de contact mesurées sur la surface de contact mesurée.

Une telle pression de serrage nominale permet la reprise du poids du dispositif mobile d'inspection 18 lors de son évolution dans un volume d'air, le passage de l'interface entre l'air et l'eau à la surface de l'étendue d'eau 12, en étant soumis aux mouvements de l'étendue d'eau 12, et le déplacement dans l'étendue d'eau 12.

La pression de serrage nominale appliquée par chaque pince 28, 30 est choisie pour correspondre à la reprise du poids du dispositif mobile d'inspection 18 et des efforts hydrodynamiques s'appliquant sur ledit dispositif mobile d'inspection ainsi que pour répondre à toutes les problématiques évoquées précédemment et intervenant notamment lorsque le dispositif mobile d'inspection 18 sort de l'étendue d'eau 12 et se situe dans la zone d'éclaboussement. Elle est généralement constante, quel que soit la position du dispositif mobile d'inspection 18, soit dans l'étendue d'eau 12, soit à l'interface entre l'étendue d'eau 12 et l'air situé au-dessus de l'étendue d'eau 12, soit totalement dans l'air au-dessus de l'étendue d'eau 12.

Le poids du dispositif mobile d'inspection 18 peut être totalement ou partiellement compensé par les flotteurs 31 dans l'étendue d'eau 12. La pression de serrage nominale est alors surabondante. Elle est également surabondante lorsque le dispositif mobile d'inspection 18 est situé totalement dans l'air, mais dans une moindre mesure que lorsque le dispositif est situé totalement dans l'étendue d'eau 12.

Dans un autre mode de réalisation, la pression de serrage nominale est avantageusement adaptée à la position du dispositif mobile d'inspection 18 sur la ligne de production 16 et réglée égale à la pression nécessaire au maintien du dispositif mobile d'inspection 18 sur la ligne de production 16 en cette dite position.

La pression de serrage précitée s'applique de préférence sur une aire supérieure à 200 cm$^2$, avantageusement supérieure à 2000 cm$^2$ et comprise de préférence entre 1500 cm$^2$ et 8000 cm$^2$ sur la surface extérieure 22 de la ligne de production 16. Cette aire correspond alors à la surface de contact entre la pince 28, 30 et la ligne de production 16 évoquée précédemment.

La surface de contact réelle entre la pince 28, 30 et la ligne de production 16 peut être mesurée au moyen d'un film révélateur du type Fujifilm Prescale, Extreme Low Pressure, 4LW R310 3M 1-E, qui se colore sous l'effet d'une pression supérieure à 0.5 bar. Le film révélateur est agencé sur tout le pourtour de la ligne de production 16, ou d'un gabarit cylindrique de même diamètre que ladite ligne de production, entre ladite ligne de production, ou ledit gabarit, et une pince 28, 30. La pince 28, 30 est ensuite actionnée de manière à enserrer la ligne de production 16, ou le gabarit, et ainsi appliquer une pression sur le film révélateur. La surface du film révélateur se colore ainsi en chaque point où la pression appliquée par la pince 28, 30 est supérieure à 0,5 bar. La pince 28, 30 est ensuite desserrée de la ligne de production 16, ou du gabarit, de manière à libérer le film révélateur. Il est alors possible de mesurer la surface colorée du film révélateur par différents moyens de mesure, par exemple, un dispositif infrarouge de mesure d'aire, un dispositif d'acquissions d'image du type scanner couplé à un logiciel de traitement informatique de l'image, etc.

Cette valeur est une approximation raisonnable de la surface de contact réelle entre la pince 28, 30 et la ligne de production 16, et en tout état de cause une valeur basse de ladite surface de contact réelle.

Une autre solution pour mesurer la surface de contact réelle consiste à utiliser un capteur de pression matriciel de façon identique à ce qui a été précédemment décrit, seul le traitement logiciel variant et consistant à interpoler la surface de contact réelle plutôt que la pression de serrage nominale.

La pression de serrage est avantageusement répartie autour de la ligne de production 16, et s'applique avantageusement sur 30% ou plus de la périphérie de la ligne de production 16, préférentiellement sur 70% ou plus de la périphérie de la ligne de production 16. Ceci limite les risques de déformation de la section de la ligne de production 16. Le rapport entre la longueur périmétrique de contact de chaque pince 28, 30 sur la ligne de production 16 et le périmètre de la pince 28, 30 au niveau du contact avec la ligne de production 16 est avantageusement au moins égale à 0,3, préférentiellement au moins égal à 0,7.

Chaque pince 28, 30 définit ainsi une surface de contact avec la ligne de production 16, de longueur avantageusement comprise entre 150 mm et 600 mm, préférentiellement comprise entre 300 mm et 500 mm, prise le long de l'axe local de la ligne de production 16 dans la pince 28, 30. Cette longueur est plus généralement inférieure à 0,8 fois le diamètre extérieur de la ligne de production 16.

La composante axiale de la force de serrage verticale s'opposant au poids du dispositif mobile d'inspection 18 est généralement comprise entre 20 kN et 80 kN, préférentiellement compris entre 20 kN et 50 kN.

De manière avantageuse, la Demanderesse a développé un modèle de calcul de la composante axiale minimale à reprendre faisant notamment intervenir :

- le poids du dispositif mobile d'inspection 18 dans l'air ;
- les efforts hydrodynamiques suivants :

  - la poussée d'Archimède (« Buoyancy Force » en langue anglaise) qui dépend du volume immergé du dispositif mobile d'inspection 18 ;
  - la force d'inertie lors du déplacement du dispositif mobile d'inspection 18 (« inertia force » en langue anglaise) ;
  - les efforts d'amortissement hydrodynamique (« wave damping force » en langue anglaise) ;
  - l'effort de trainée du dispositif mobile d'inspection 18 dans l'eau (« drag force » en langue anglaise) ;
  - les efforts d'excitation hydrodynamique (« wave excitation force » en langue anglaise) ;
  - les efforts de claquement (notamment des vagues s'écrasant sur le dispositif mobile d'inspection 18, « slamming force » en langue anglaise) ;
  - les efforts d'extraction de l'eau (« water exit force » en langue anglaise) ;
  - les efforts exercés par la ligne de production 16 sur le dispositif mobile d'inspection 18 liés au mouvement de la ligne de production 16 reliée à l'installation 10 d'exploitation de fluide, cette dernière étant sujet à des efforts hydrodynamiques liés à la houle.

- des coefficients de sécurité.

Il ressort du modèle, compte tenu des ordres de grandeur de poids et de volume du dispositif mobile d'inspection 18, ainsi que des états de mer pour lesquels le dispositif mobile d'inspection 18 est destiné à fonctionner (hauteur de houle Hs inférieure ou égale à 3 m), la composante axiale minimale à reprendre est égale au produit d'un coefficient β de reprise des efforts hydrodynamiques résultant du modèle hydrodynamique par le poids du dispositif mobile d'inspection 18. Dans une approximation adéquate, le coefficient β est généralement compris entre 1,7 et 2,7 selon les états de mer souhaités et un choix plus ou moins sévère des coefficients de sécurité. De manière optimale, le coefficient β est avantageusement choisi entre 2 et 2,4, préférentiellement égal à 2,25.

Ainsi, l'effort de serrage radial est avantageusement calculé par la formule :

$$(\beta \times Fc) / f$$

La pression de serrage est avantageusement calculée par la formule :

$$(\beta \times Fc) / (f \times Sc) = (\beta \times Fc) / (f \times 2 \times \pi \times a \times Rc \times Lc)$$

où β est le coefficient de reprise des efforts hydrodynamiques résultant du modèle hydrodynamique, Fc est la charge axiale, prise égale au poids dans l'air du dispositif mobile d'inspection 18, f est le coefficient de friction significatif, Sc est la surface de contact entre la pince 28, 30 et la ligne de production 16. Pour le calcul de la surface Sc, a est le rapport entre la longueur périmétrique de contact de chaque pince 28, 30 sur la ligne de production 16 et le périmètre de la pince 28, 30 au niveau du contact avec la ligne de production 16, Rc est le rayon externe de la ligne de production 16, et Lc est la longueur de la pince 28, 30, prise le long de l'axe local de la ligne de production 16.

De façon identique la pression de serrage nominale est avantageusement calculée par la formule :

$$(\beta \times Fc) / (f \times Sm) = (\beta \times Fc) / (f \times 2 \times \pi \times Rc \times Lc)$$

Où Sm est la surface globale.

La valeur de a est avantageusement au moins égale à 0,3, préférentiellement au moins égal à 0,7 pour les pinces 28, 30 selon l'invention.

Le coefficient de friction significatif f est calculé comme suit. Pour les conduites flexibles, le coefficient f est généralement pris égal au coefficient de friction entre la gaine externe et les armures qui est généralement plus faible que le coefficient de friction entre la surface de la pince 28, 30 et la gaine externe. Le plus faible des deux coefficients est généralement choisi. La valeur de f est choisie généralement entre 0,05 et 0,5, pour les conduites flexibles préférentiellement 0,07, avantageusement 0,3.

Pour les conduites rigides, et les ombilicaux, le coefficient f est généralement pris égal au coefficient de friction entre la surface de la pince 28, 30 et de la surface extérieure 22 de la ligne de production 16. Il est choisi entre 0,2 et 0,9 pour les conduites rigides et les ombilicaux, avantageusement choisi égal à 0,3.

Des exemples de pression de serrage nominale minimales et d'efforts de serrage pour des conduites flexibles, avec une longueur de la surface de contact de la pince 28, 30 avec la ligne de production 16 de 400 mm, sont donnés dans le tableau ci-dessous :

| Coefficient de frottement | 0,07 | 0,3 |
|---|---|---|
| Effort de serrage (kN) | 631 | 147 |
| Diamètre de la ligne de production 16 (m) | Pression de serrage nominale (bar) | |
| 0,46 (18") | 11,0 | 2,6 |
| 0,35 (14") | 14,1 | 3,3 |
| 0,25 (10") | 19,8 | 4,6 |
| 0,15 (6") | 32,9 | 7,7 |

Des exemples de pression de serrage nominale minimales et d'efforts de serrage pour des conduites rigides ou des ombilicaux, avec une longueur de la surface de contact de la pince 28, 30 avec la ligne de production 16 de 400 mm, sont donnés dans le tableau ci-dessous :

| Matériau pince 28, 30 | Acier | Aluminium | Acier | Acier |
|---|---|---|---|---|
| Matériau surface extérieure ligne de production 16 | Acier | Acier | Polyéthylène | Polyéthylène |
| Coefficient de frottement | 0,25 | 0,45 | 0,3 | 0,8 |
| Effort de serrage (kN) | 177 | 98 | 147 | 55 |
| Diamètre de la ligne de production 16 (m) | Pression de serrage nominale (bar) | | | |
| 0,46 (18") | 3,1 | 1,7 | 2,6 | 1,0 |
| 0,35 (14") | 4,0 | 2,2 | 3,3 | 1,2 |
| 0,25 (10") | 5,5 | 3,1 | 4,6 | 1,7 |
| 0,15 (6") | 9,2 | 5,1 | 7,7 | 2,9 |

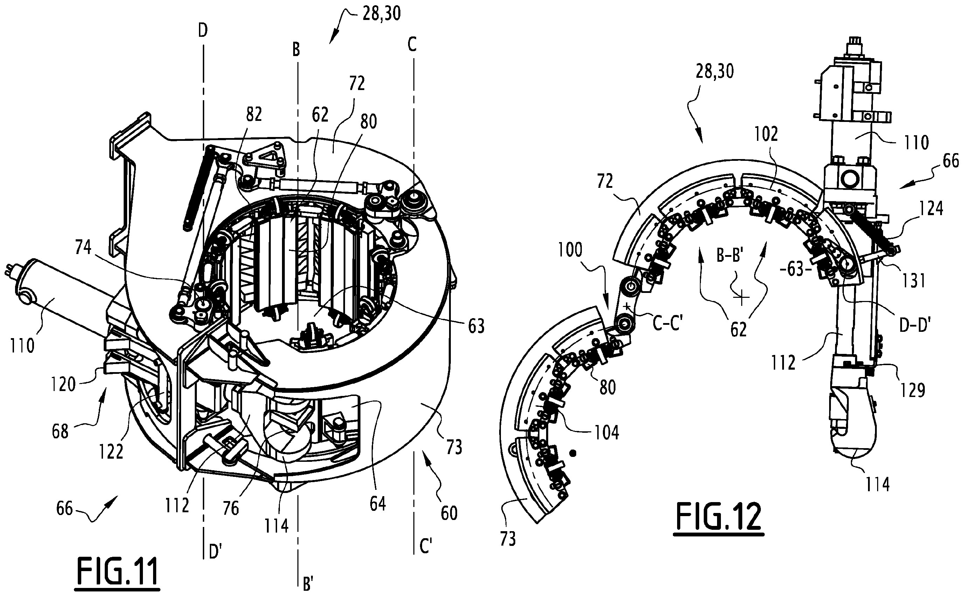

Dans l'exemple représenté sur la figure 11, chaque pince 28, 30 comporte un cadre 60, et un mécanisme d'ouverture du cadre 60 (non représenté).

Chaque pince 28, 30 comprend en outre une pluralité de patins 62 de contact avec la ligne de production 16, définissant un passage central 63 d'insertion de la ligne de production 16, d'axe B-B', une ceinture 64 de serrage des patins 62, un actionneur 66 de serrage, propre à serrer la ceinture 64 et, selon l'invention, un mécanisme 68 d'écartement radial de l'actionneur de serrage 66.

Le cadre 60 comporte deux segments de cadre 72, 73 rigides, articulés l'un par rapport au l'autre autour d'un axe C-C' parallèle à l'axe B-B' du passage 63. Les segments de cadre 72, 73 présentent chacun une forme de C.

Le cadre 60 définit sur un premier segment de cadre 72, un premier point 74 d'articulation de l'actionneur 66 autour d'un axe D-D' parallèle à l'axe B-B'.

Les segments de cadre rigide 72 sont mobiles l'un par rapport à l'autre autour de l'axe C-C' entre une configuration ouverte représentée sur la figure 12, et une configuration fermée, représentée sur la figure 11.

Le mécanisme comporte un vérin monté sur l'un des segments de cadre rigide et une bielle raccordant le vérin à l'autre des segments de cadre 73. En variante, le mécanisme comporte une clé à couple hydraulique.

Dans l'exemple représenté sur les figures 11 à 13, le déploiement d'une tige du vérin provoque la fermeture du cadre 60, et la rétraction de la tige provoque l'ouverture du cadre 72 par déplacement en rotation du deuxième segment de cadre 73 par rapport au premier segment de cadre 72.

Pour obtenir une bonne répartition des efforts, chaque pince 28, 30 comporte au moins trois patins de contact 62, avantageusement au moins cinq patins de contact 62, préférentiellement au moins sept patins de contact 62. Lorsque les patins de contact 62 ont une mâchoire 80 comportant une surface de contact en V, avec un angle d'ouverture compris entre 120° et 170°, préférentiellement de 150°, le nombre de patins de contact 62 est avantageusement égal à sept pour fournir une bonne répartition des efforts dans la gamme d'inspection de 30 cm (12 pouces) à 46 cm (18 pouces) de diamètre externe pour la ligne de production 16.

Les patins de contact 62 sont montés mobiles dans le cadre 60, en étant raccordés les uns aux autres par la ceinture de serrage 64.

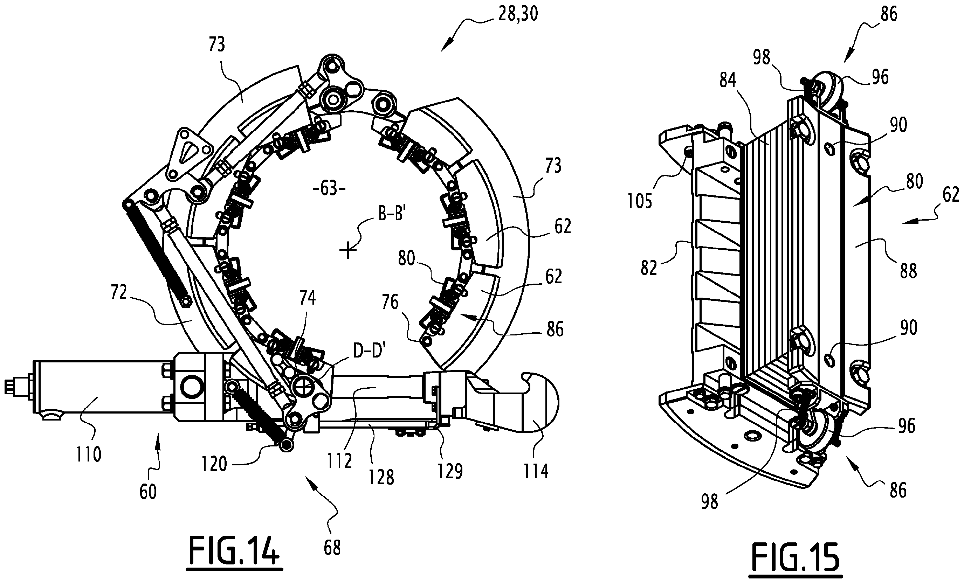

En référence à la figure 15, chaque patin 62 comporte une mâchoire 80 destinée à entrer en contact avec la ligne de production 16, un support de guidage 82, recevant la mâchoire 80 et éventuellement, une ou plusieurs entretoises 84 interposées entre le support de guidage 82 et la mâchoire 80 pour positionner radialement la mâchoire 80 dans le passage central 63.

Chaque patin 62 comporte en outre au moins un élément 86 de poussée radial, propre à décoller le patin 62 de la ligne de production 16, lors du desserrage de la pince 28, 30.

La mâchoire 80 est préférentiellement réalisée en aluminium, qui fournit un compromis optimal entre la masse, la résistance, les possibilités de fabrication et le coût. En variante, d'autres matériaux sont utilisés tels que l'acier ou titane, un polymère, etc. La mâchoire 80 peut comporter une surface de contact plane, incurvée, en V, ou de toute autre forme convenant à l'homme du métier. Lorsque la surface de contact est en V, l'angle d'ouverture du V est avantageusement compris entre 120° et 170°.

La mâchoire 80 comporte éventuellement un revêtement élastique. Préférentiellement, le revêtement élastique est élastique selon la composante radiale et est rigide selon la composante axiale. Ceci évite les mouvements du dispositif mobile d'inspection 18 dans le sens vertical et maintient une bonne précision dans les mesures.

En référence à la figure 15, la mâchoire 80 définit une surface interne 88 concave de contact avec la ligne de production 16. Elle comporte, radialement à l'opposé de la surface interne 88, des tiges 90 de montage des entretoises 84 et d'insertion dans le support de guidage 82.

La surface interne 88 est avantageusement rugueuse ou striée.

Les entretoises 84 sont engagées dans les tiges 90 à l'arrière de la mâchoire 80.

Dans une variante non représentée, le support de guidage 82 comporte, de part et d'autre du patin 62, au moins un organe circonférentiel de guidage en saillie latérale par rapport à la mâchoire 80 pour coopérer avec le support de guidage 82 d'un patin adjacent 62 et au moins un logement de réception d'un organe circonférentiel de guidage d'un patin 62 adjacent.

Avantageusement, le support de guidage 82 comporte de part et d'autre du patin 62, une pluralité d'organes circonférentiels de guidage parallèles les uns aux autres définissant entre des logements parallèles de réception.

Ainsi, lors du serrage de la pince 28, 30, les patins 62 adjacents sont propres à se rapprocher l'un de l'autre latéralement sans déplacement suivant l'axe B-B', en étant guidés par la coopération entre les organes circonférentiels de guidage sur un patin 62 et les logements de réception correspondants sur un patin adjacent 62.

Dans l'exemple représenté sur les figures 11 et 15, chaque patin 62 comprend deux éléments de poussée radiale 86 faisant saillie de part et d'autre du patin 62, aux extrémités axiales de la mâchoire 80.

Chaque élément de poussée radial 86 comporte un organe 96 de roulage sur la ligne de production 16, mobile radialement entre une position avancée de contact avec la ligne de production 16, et une position effacée, et un organe 98 de sollicitation élastique de l'organe de roulage 96 vers la position avancée.

Lors du serrage de la pince 28, 30, l'organe de roulage 96 est propre à s'effacer en s'écartant de l'axe B-B', à l'encontre de l'organe de sollicitation élastique 98. Au contraire, lors du desserrage de la pince 28, 30, l'organe de sollicitation élastique 98 écarte l'organe de roulage 96 de la mâchoire 80, provoquant le décollement de la mâchoire 80 à l'écart radialement de la ligne de production 16.

Dans cet exemple, l'organe de roulage 96 est un galet rotatif. En variante, l'organe de roulage 96 est une bille roulant dans une cage sphérique. Dans encore une autre variante, l'organe de roulage 96 est substitué par un organe d'appui, tel qu'un ski sur une lame ressort.

L'organe de sollicitation élastique 98 est propre à exercer un effort radial de quelques daN, par exemple compris entre 1 daN et 50 daN.

Ainsi, le décollement produit est d'au moins 0,1 mm, préférentiellement d'au moins 4 mm et peut aller jusqu'à 100 mm, voire plus.

La ceinture de serrage 64 est par exemple réalisée à base d'une bande souple 100 disposée autour des patins 62 pour maintenir les patins 62. La bande souple 100 disposée à l'arrière des patins 62 comporte une première partie 102 raccordée à un premier segment de cadre 72 et une deuxième partie 104 raccordée à un deuxième segment de cadre 73. De manière à éviter de plier la bande souple 100 pendant l'ouverture de la pince, la première partie 102 peut être reliée à la deuxième partie 104 au moyen d'une pièce de jonction articulée. Cette pièce de jonction articulée peut notamment prendre la forme d'une charnière simple ou double. Le raccordement entre la bande souple 100 portant les patins 62 et les segments de cadre 72, 73 autorise un jeu radial entre eux.

La bande souple 100 est généralement réalisée en métal, préférablement réalisée en acier inoxydable duplex (Par exemple nuance 1.4462, E= 200GPa, Rm = 640MPa à 20°C) mais peut également être réalisée en matériau composite. Elle présente une épaisseur comprise entre 1 mm et 10 mm, préférentiellement 4 mm, et une hauteur comprise entre 100 mm et 600 mm, préférentiellement supérieure à 300 mm.

La bande souple 100 est avantageusement cintrée avant montage pour lui donner la forme initiale.

En variante, la ceinture de serrage 64 comporte plusieurs bandes souples 100 de dimensions réduites par rapport à celle qui vient d'être décrite.

La bande souple 100 est agencée à l'arrière des supports de guidage 82 des patins 62, en formant des charnières souples entre les patins 62 successifs, pour autoriser un déplacement circonférentiel des patins 62 l'un par rapport à l'autre.

La bande souple 100 est simplement plaquée à l'arrière des supports 82. Des têtes de vis 105 (CHC ou autre, visibles sur la figure 15) vissées dans les supports 82 de part et d'autre de la bande souple 100 évitent que les patins 62 ne se détachent de la bande souple 100. Lors du serrage, la bande souple 100 glisse à l'intérieur d'un rail formé par l'arrière des supports de guidage 82 et les têtes de vis. Préférentiellement, les supports 82 comportent chacun au moins trois vis.

La surface à l'arrière des supports de guidage 82 est préférentiellement bombée. La surface à l'arrière des supports de guidage 82 est avantageusement rectifiée de manière à favoriser le glissement de la bande souple 100 et à limiter avantageusement l'effet cabestan lors du serrage de ladite bande souple 100. Une couche de plastique favorisant le glissement peut également être installée à l'arrière des supports de guidage 82, entre la bande souple 100 et les patins 62.

La ceinture de serrage 64 est ainsi propre à être manœuvrée conjointement avec le cadre 60 entre la configuration ouverte de la figure 12, et la configuration fermée de la figure 11, dans laquelle elle est desserrée.

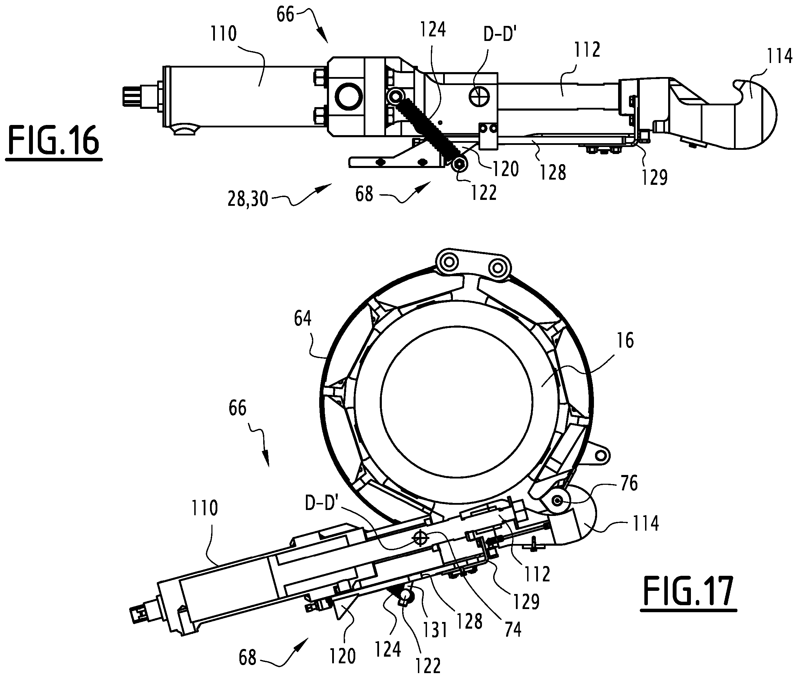

La deuxième partie 104 de la ceinture 64 définit en outre un deuxième point 76 propre à être saisi par l'actionneur de serrage 66, pour passer la ceinture dans une configuration de serrage autour de la ligne de production 16, illustrée par la figure 17.

Pour atteindre la configuration desserrée, la pince 28, 30 atteint une valeur de circonférence de diamètre égal au diamètre nominal plus le jeu nécessaire tel que décrit plus haut (au moins 0,1 mm, préférentiellement d'au moins 4 mm et notamment jusqu'à 100 mm, voire plus).

Cette configuration desserrée est intermédiaire entre la configuration de serrage et la configuration ouverte.

Le deuxième point 76 est par exemple défini sur une barre longitudinale portée par un patin 62 d'extrémité.

En référence aux figures 12 à 14 et 16 à 17, l'actionneur de serrage 66 est formé par un vérin comportant une chambre 110 et un organe de saisie 112 déployable à partir de la chambre 110.

L'organe de saisie 112 comporte à son extrémité libre un crochet 114 destiné à saisir le deuxième point 76.

L'organe de saisie 112 est mobile en translation le long d'un axe de déplacement dans la chambre 110 entre une position déployée, visible sur la figure 16 et une position rétractée, visible sur la figure 17 pour rapprocher le deuxième point 76 du premier point 74 lorsque l'organe de saisie 112 a saisi le deuxième point 76.

L'actionneur de serrage 66 est en outre articulé sur le cadre 60 autour d'un axe D-D' parallèle à l'axe B-B' du passage 63, l'axe D-D' passant par le premier point 74.

Ainsi, la chambre 110 et l'organe de saisie 112 sont déplaçables conjointement en rotation autour de l'axe D-D' entre une configuration de saisie du deuxième point 76 et une configuration écartée radialement du deuxième point 76, pour permettre la fermeture respectivement l'ouverture du cadre 60 et de la ceinture de serrage 64.

L'axe de déplacement de l'organe de saisie 112 est avantageusement perpendiculaire à l'axe D-D'.

Dans la configuration de saisie (figure 17), l'extrémité libre de l'organe de saisie 112 et l'axe de déplacement se sont rapprochés de l'axe B-B' du passage central 63. Au contraire, dans la configuration écartée radialement (figure 16), l'extrémité libre de l'organe de saisie 112 et l'axe de déplacement se sont éloignés de l'axe B-B' du passage central 63.

Selon l'invention, le mécanisme d'écartement radial 68 comporte au moins un premier organe 120 de coopération par effet de came, déplaçable conjointement avec l'organe de saisie 112, et un deuxième organe 122 de coopération par effet de came, propre à coopérer avec le premier organe de coopération 120, le deuxième organe de coopération 122 étant solidaire du cadre 60 et/ou de la ceinture 64.

Le mécanisme d'écartement radial 68 comporte en outre un organe de sollicitation élastique 124, propre à ramener l'organe de saisie 112 vers la configuration de saisie, et avantageusement, un organe de liaison mécanique 126 entre l'organe de saisie 112 et le premier organe de coopération 120.

Dans l'exemple représenté sur les figures 11 et 12, le premier organe de coopération 120 est une came, avantageusement de profil incliné. Le deuxième organe de coopération 122 est un suiveur de came, avantageusement de profil incurvé.

La pente du profil incliné est par exemple comprise entre 10° et 60°

En variante (non représentée), le deuxième organe de coopération 122 est une came, le premier organe de coopération 120 étant un suiveur de came.

L'organe de liaison mécanique 126 comporte une plaque latérale 128, montée parallèle à l'axe de translation de l'organe de saisie 112. La plaque 128 est raccordée transversalement à l'organe de saisie 112, ici par l'intermédiaire d'une équerre 129. Elle est guidée le long de la chambre 110.

Le premier organe de coopération 120 est monté sur la plaque 128. Il fait saillie latéralement par rapport à la plaque 128, à l'opposé de la chambre 110, à l'extérieur du cadre 60.

L'organe de sollicitation élastique 124 est articulé à une première extrémité sur un bras 131 solidaire du cadre 60, et à une deuxième extrémité sur la chambre 110. Il est par exemple formé par un ressort hélicoïdal.

L'organe de sollicitation élastique 124 est propre à ramener la deuxième extrémité de l'organe de sollicitation élastique 124 au voisinage de sa première extrémité pour faire pivoter l'organe de saisie 112 de la configuration écartée à la configuration de saisie.

Dans la position déployée de l'organe de saisie 112, visible sur la figure 16, le premier organe de coopération 120 est placé en contact mécanique avec le deuxième organe de coopération 122. Par effet de came, la coopération mécanique entre les organes 120, 122 pousse la chambre 110 vers l'axe B-B' du passage 63 et écarte radialement l'extrémité libre de l'organe de saisie 112 à l'écart de l'axe B-B' du passage 63. Ceci provoque également l'extension de l'organe de sollicitation élastique 124.

Lorsque l'organe de saisie 112 se rétracte dans la chambre 110, l'inclinaison de la came provoque le déplacement progressif en rotation de l'extrémité libre de l'organe de saisie 112 vers l'axe B-B'.

A partir d'une position intermédiaire de l'organe de saisie 112 entre la position déployée et la position rétractée, visible sur la figure 17, le premier organe de coopération 120 cesse de coopérer par effet de came avec le deuxième organe de coopération 122. L'organe de saisie 112 occupe alors sa configuration de saisie du deuxième point 74 et ce, jusqu'à la position rétractée.

En référence à la figure 2, le mécanisme de déplacement longitudinal 50 comporte au moins un vérin longitudinal 140 raccordant longitudinalement les pinces 28, 30. Dans l'exemple représenté sur la figure 2, le mécanisme de déplacement longitudinal 50 comporte deux vérins longitudinaux 140 disposés latéralement de part et d'autre des pinces 28, 30.

Chaque vérin longitudinal 140 comprend un cylindre 142 articulé sur le cadre 60 du support d'inspection 24 et une tige 144 déployable à partir du cylindre 142. La tige 144 déployable est articulée sur la pince inférieure 30 à son extrémité libre.

Le déplacement de la tige 144 est généralement supérieur à 100 mm, pouvant aller jusqu'à 0,5 m, voire plus.

Chaque vérin longitudinal 140 s'étend parallèlement à l'axe B-B' des pinces 28, 30 lorsque les pinces 28, 30 sont parallèles l'une à l'autre.

Les vérins 140 sont sensiblement coplanaires, le plan défini par les vérins 140 étant le plus proche possible de l'axe de la ligne de production 16 de manière à répartir les efforts de part et d'autre de la ligne de production 16, par exemple à une distance comprise entre 60 mm et 120 mm de l'axe de la ligne de production 16.

Les vérins 140 sont avantageusement agencés dans un plan contenant ou du moins le plus proche de l'axe de la ligne de production 16 pour équilibrer les efforts et limiter les moments appliqués sur la ligne de production 16.

Le plan défini par les vérins 140 est préférentiellement incliné d'un ou quelques degrés par rapport à l'axe de la ligne de production 16, de manière à ce que les moments autour de l'axe A-A' de la ligne de production 16 résultant des efforts tangentiels des vérins 140 sur les pinces 28, 30 s'annulent. En effet, les deux extrémités de chacun des vérins 140 sont généralement articulés sur les pinces 28, 30 par l'intermédiaire de liaisons rotules, ou de liaisons pivots. Ainsi, lorsque les vérins 140 se déploient, il subsiste un risque que le vérin 140 s'incline par rapport à l'axe de la ligne de production 16 et tende à provoquer une rotation d'une pince 28, 30 par rapport à l'autre autour de l'axe B-B'. Si le deuxième vérin suit le mouvement initié par le premier vérin, le mouvement de rotation sera alors amplifié.

Ce problème est résolu en pré-inclinant les vérins 140, de sorte qu'ils ne puissent pas s'incliner de concert mais que leurs inclinaisons génèrent sur les pinces 28, 30 des moments d'axe B-B' qui s'opposent et s'annulent.

Le mécanisme de déplacement longitudinal 50 est propre à déplacer la pince inférieure 30 par rapport à la pince supérieure 28 en translation parallèlement à l'axe B-B' du passage central 63, coaxial avec l'axe A-A' de la ligne de production 16, entre une position rapprochée, visible sur la figure 3 et une position éloignée, visible sur la figure 2.

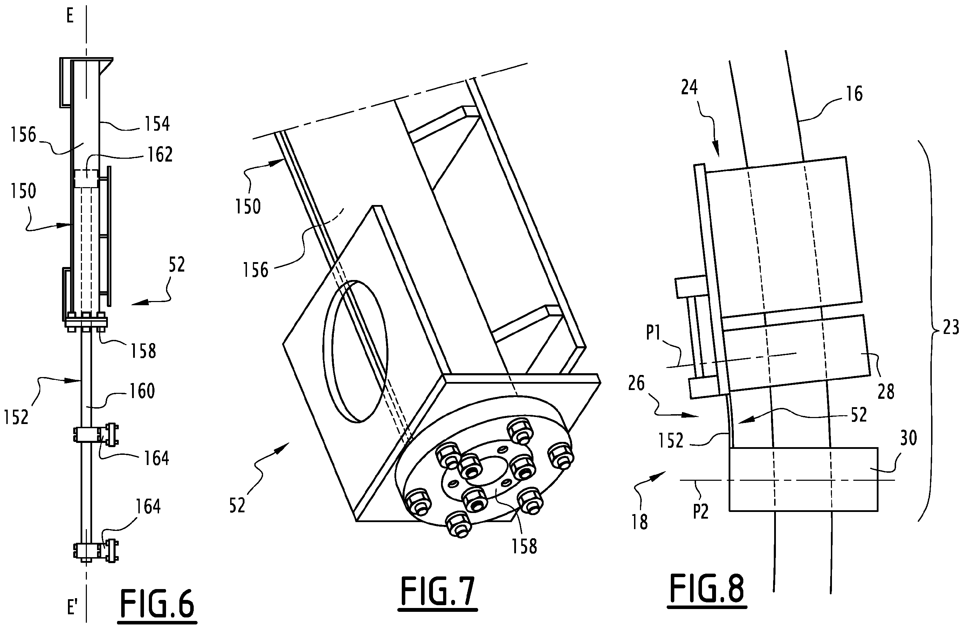

Le mécanisme d'inclinaison 52 est propre à permettre un mouvement des pinces 28, 30 en rotation l'une par rapport à l'autre autour d'un axe perpendiculaire à l'axe A-A' de la ligne de production 16 entre une position parallèle l'une à l'autre, visible sur les figures 2 et 3, et au moins une position inclinée l'une par rapport à l'autre, dont des exemples sont visibles sur les figures 8 à 10, pour le passage d'une partie inclinée 23 de la ligne de production 16.

En référence à la figure 6, le mécanisme d'inclinaison 52 comporte une chemise creuse 150 et une barre de flexion 152 faisant saillie hors de la chemise creuse 150. La barre de flexion 152 est propre à passer d'une configuration droite, dans la position parallèle des pinces 28, 30, à au moins une configuration incurvée, dans la position inclinée des pinces 28, 30.

Le rayon de courbure minimum des lignes de production 16 sur lesquels le dispositif mobile d'inspection 18 se déplace est avantageusement de 50 m.

La chemise creuse 150 s'étend parallèlement à l'axe B-B' du passage central 63, perpendiculairement au cadre 60 du support d'inspection 24 et à l'arrière de celui-ci. Le cadre 60 est fixé sur la chemise creuse 150.

La pince supérieure 28 s'étend également perpendiculairement à la chemise creuse 150. Elle est montée fixe sur la chemise creuse 150.

La chemise creuse 150 comporte un tube 154 définissant un logement 156 de circulation de la barre de flexion 152, et un manchon inférieur de guidage 158, fermant le logement 156 à son extrémité inférieure pour guider la barre de flexion 152.

La barre de flexion 152 comporte une tige déformable 160, une tête 162 de guidage insérée dans le logement 156, et des attaches 164 de fixation de la pince inférieure 30.

La tige déformable 160 présente un diamètre externe inférieur au diamètre interne du logement 156 pour délimiter un espace annulaire dans le logement 156. Elle présente un diamètre externe de forme complémentaire à celui du manchon de guidage 158.

La tige déformable 160 a préférentiellement une section circulaire creuse ou pleine de manière à permettre une flexion dans toutes les directions radiales à la tige déformable 160. En effet, selon la position du dispositif mobile d'inspection 18 sur la ligne de production 16, la flexion s'opère selon des directions différentes (extrados, intrados ou positions intermédiaires).

Une section circulaire donne également une bonne élasticité, de manière à s'opposer à la rotation d'une pince 28, 30 par rapport à l'autre.

La tige déformable 160, lorsqu'elle est pleine présente un diamètre compris entre 10 mm et 30 mm. Lorsqu'elle est creuse, la tige déformable 160 à une épaisseur comprise entre 3 mm et 5 mm et un diamètre extérieur compris entre 30 mm et 50 mm.

La tige déformable 160 est réalisée en métal, par exemple en aluminium, en acier inoxydable ou en titane.

De manière avantageuse, la tige déformable 160 est réalisée d'un matériau avec un module d'Young E inférieur à 220 GPa, préférentiellement inférieur à 130 GPa, et une limite élastique Re, avantageusement supérieure à 300 MPa, préférentiellement supérieure à 1000 MPa.

Le matériau préféré est le titane (E = 105 GPa et Re supérieur à 1000 MPa) pour sa résistance élastique plus importante et son module d'Young plus faible que l'acier.

En variante, la tige déformable est réalisée en matériau composite.

La tête de guidage 162 fait saillie radialement par rapport à la tige 160. Elle présente une forme complémentaire à celle du logement 156. Elle est propre à coulisser dans le logement 156 jusqu'au manchon de guidage 158.

La tête 162 et le manchon de guidage 158 sont avantageusement réalisés en plastique, par exemple en polyéthylène haute densité pour présenter un faible coefficient de friction et une faible absorption en eau.

Dans l'exemple des figures, les attaches 164 raccordent la pince inférieure 30 à une partie inférieure de la barre de flexion 152. La pince inférieure 30 s'étend perpendiculairement à la barre de flexion 152.

La barre de flexion 152 est déplaçable en translation le long de l'axe E-E' de la chemise creuse 150, en étant guidée par la chemise creuse 150, lors du déplacement de la pince inférieure 30 par rapport à la pince supérieure 28.

En outre, la barre de flexion 152 est propre à passer d'une configuration droite, dans l'axe E-E' de la chemise 150 à une configuration incurvée, avantageusement en forme d'arc de cercle.

Dans la configuration droite, les pinces 28, 30 sont parallèles l'une à l'autre. Le plan P1 perpendiculaire à l'axe B-B' du passage central 63 de la pince 28 est parallèle au plan P2 perpendiculaire à l'axe B-B' du passage central 63 de la pince 30.

Dans la configuration incurvée, la barre de flexion 152 présente un rayon de courbure supérieur à 50 m (ce qui est le rayon de courbure minimal de la ligne de production 16) et notamment compris entre 50 m et l'infini lorsque la ligne de production 16 est rectiligne. Les plans P1, P2 respectifs des pinces 28, 30 sont inclinés l'un par rapport à l'autre d'un angle non nul inférieur à 3° et notamment compris entre 0° et 3°, 0° étant quand il n'y a pas de courbure.

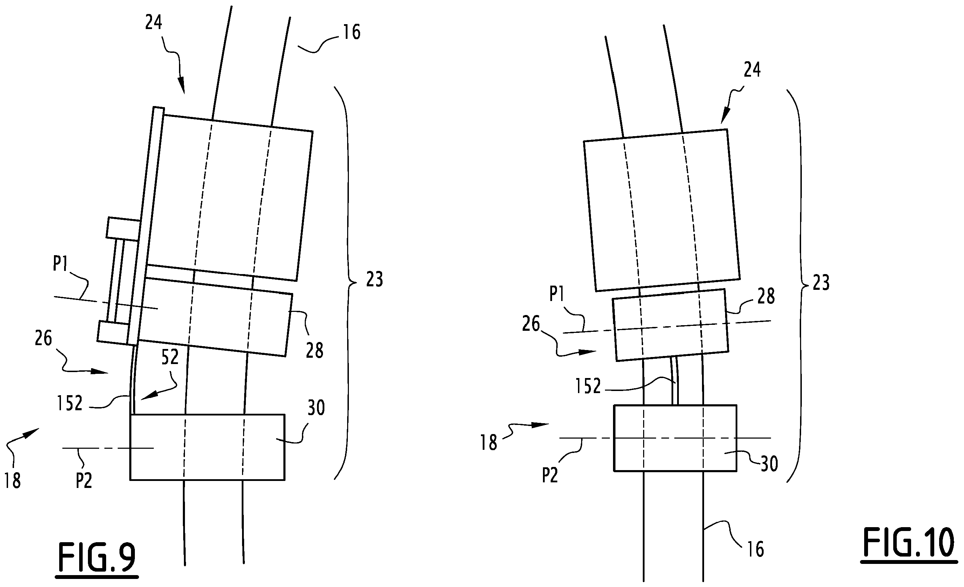

L'élasticité de la barre de flexion 152 est propre à rapprocher les bords libres des pinces 28, 30, situés à l'opposé de la barre de flexion 152 l'un de l'autre par un rapport à leur position parallèle (voir figure 9) ou au contraire à les éloigner l'un de l'autre par rapport à leur position parallèle (voir figure 8).

La barre de flexion 152 est située à l'arrière des pinces 28, 30, sensiblement à mi-distance des vérins longitudinaux 140. Les pinces 28, 30 sont ainsi reçues dans l'espace de section transversale triangulaire défini entre la barre de flexion 152, un premier vérin longitudinal 140, et un deuxième vérin longitudinal 140.

Ceci empêche la rotation relative des pinces 28, 30 autour de l'axe E-E' de la chemise 150. La barre de flexion 152 agit comme un ressort qui exerce un moment s'opposant au mouvement de rotation et qui tend à ramener les pinces 28, 30 dans le même axe.

Le fonctionnement du dispositif mobile d'inspection 18 selon l'invention, lors d'une campagne d'inspection de la ligne de production 16, va maintenant être décrit.

Initialement, le dispositif mobile d'inspection 18 est descendu dans l'étendue d'eau 12 à partir de l'ensemble de surface 14 ou d'un navire distinct de l'ensemble de surface 14.

Le dispositif mobile d'inspection 18 est avantageusement accouplé à un véhicule télécommandé sous-marin (« Remotely Operated Vehicle » ou ROV) par l'intermédiaire d'une interface 160 solidaire du cadre 60.

Le dispositif mobile d'inspection 18 est alors amené au voisinage de la ligne de production 16. Les pinces 28, 30 sont ouvertes.

À cet effet, l'actionneur de serrage 66 est désactivé. L'organe de saisie 112 occupe sa position déployée. Le mécanisme d'écartement radial 68 est actif, le premier organe de coopération 120 coopérant alors avec le deuxième organe de coopération 122 par effet de came pour maintenir l'organe de saisie 112 dans sa configuration écartée.

Le mécanisme d'ouverture est opéré pour déplacer les segments de cadre 72, 73 l'un par rapport à l'autre et ouvrir l'accès au passage central 63.

Puis, la ligne de production 16 est introduite dans l'ouverture 34 du support d'inspection 24 et dans les passages centraux 63 des pinces 28, 30.

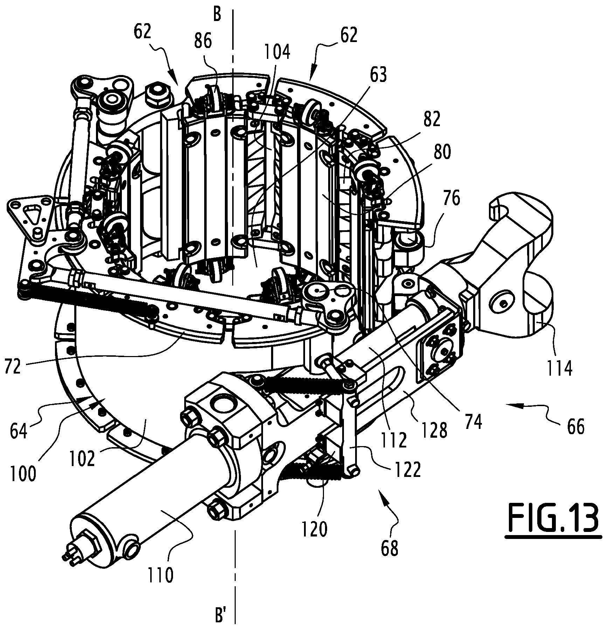

Les pinces 28, 30 sont alors refermées. Le mécanisme d'ouverture est actionné pour redéplacer les segments de cadre 72, 73 l'un au contact de l'autre et fermer le passage central 63 autour de la ligne de production 16, comme illustré par la figure 13.

Lors de ce passage, la deuxième partie de la ceinture 64 se rapproche de la première partie 102. Les patins 62 se disposent autour de la surface extérieure 22 de la ligne de production 16.

Ceci étant fait, l'organe de saisie 112 est déplacé vers sa position rétractée dans la chambre 110. Lors de ce déplacement, l'organe de saisie 112 se rapproche progressivement de sa configuration de saisie par déplacement relatif du premier organe de coopération 120 par rapport au deuxième organe de coopération 122, et par rétraction de l'organe de sollicitation élastique 124.

Lorsque l'organe de saisie 112 atteint sa position intermédiaire, le premier organe de coopération 120 se désengage du deuxième organe de coopération 122 et l'organe de saisie 112 occupe alors sa configuration de saisie du deuxième point 76.

Le crochet 114 à l'extrémité libre de l'organe de saisie 112 s'engage sur la barre au niveau du deuxième point 76 et rapproche progressivement le deuxième point 76 du premier point 74.

Les patins 62 s'appliquent alors radialement sur la surface extérieure 22 de la ligne de production 16 et enserrent progressivement la ligne de production 16, en appliquant sur la ligne de production 16 une pression de serrage telle que définie plus haut.

Le dispositif mobile 18 étant situé dans l'étendue d'eau 12, les flotteurs 31 assurant une flottabilité au dispositif mobile d'inspection 18.

Les capteurs 25 sont alors amenés au contact ou au voisinage de la surface extérieure 22 de la ligne de production 16 par l'intermédiaire du mécanisme de déplacement 40. Éventuellement, le plateau tournant 38 est entraîné en rotation autour de l'axe A-A' de la ligne de production 16 pour permettre un placement adéquat des capteurs 25, ou/et un balayage d'une circonférence de la surface extérieure 22 par les capteurs 25.

Ceci étant fait, le dispositif mobile d'inspection 18 est déplacé le long de la ligne de production 16. En partant par exemple de la position de la figure 3, dans lequel les pinces 28, 30 sont rapprochées l'une de l'autre, et lorsque le dispositif mobile d'inspection 18 doit remonter le long de la ligne de production 16, la pince supérieure 28 est desserrée, alors que la pince inférieure 30 reste serrée contre la ligne de production 16.

Chaque vérin longitudinal 140 du mécanisme de déplacement longitudinal 50 est alors activé pour écarter la pince supérieure 28 de la pince inférieure 30 et soulever conjointement la pince supérieure 28 et le support d'inspection 24 pour atteindre la configuration de la figure 2.

Lors de ce déplacement, la barre de flexion 152 s'extrait de la chemise creuse 150. La barre de flexion 152 est guidée d'une part, par le coulissement de la tête de guidage 162 dans le logement 156 et d'autre part, par le coulissement de la tige 160 dans le manchon de guidage 158.

La pince supérieure 28 est alors serrée sur la surface extérieure 22 de la ligne de production 16 et la pince inférieure 30 est desserrée.

Chaque vérin longitudinal 140 est alors rétracté pour ramener la pince inférieure 30 au voisinage de la pince supérieure 28, comme illustré par la figure 3.

Les actions précédentes sont alors répétées jusqu'à ce que le dispositif mobile d'inspection 18 atteigne la position souhaitée sur la ligne de production 16.

La barre de flexion 152 fléchit sous l'effet de la pince 28, 30 en mouvement qui en glissant/roulant le long de la ligne de production 16 suit la courbure de la ligne de production 16.

Lors du passage d'une partie incurvée 23 de la ligne de production 16, lorsque la barre de flexion 152 est positionnée au niveau de l'intrados de la partie incurvée 23, les bords libres des pinces 28, 30 s'écartent l'un de l'autre et la barre de flexion 152 passe de sa configuration droite à sa configuration incurvée, comme illustré par la figure 8.

Au contraire, lorsque la barre de flexion 152 est positionnée au niveau de l'extrados d'une partie incurvée 23 de la ligne de production 16, les bords libres des pinces 28, 30 se rapprochent l'un de l'autre et la barre de flexion 152 fléchit comme illustré par la figure 9.

Lorsque la barre de flexion 152 est positionnée latéralement par rapport à l'intrados et l'extrados de la partie incurvée 23, comme illustré par la figure 10, la pince supérieure 28 s'incline par rapport à la pince inférieure 30, sans rapprocher significativement leurs bords libres et la barre de flexion 152 fléchit.

Lorsque le dispositif mobile d'inspection 18 est orienté perpendiculairement au plan contenant l'intrados et l'extrados, la flexion des pinces 28, 30 se fait donc latéralement au lieu d'avant en arrière (ou inversement). Lorsque le dispositif mobile d'inspection 18 est dans une position intermédiaire, la flexion des pinces 28, 30 se fait dans une direction intermédiaire.

La présence d'une barre de flexion 152 disposée entre les pinces 28, 30 assure un passage aisé des parties incurvées 23 de la ligne de production 16, quelle que soit la configuration de courbure de la partie incurvée 23, et la position relative des pinces 28, 30 par rapport à la ligne de production 16, sans rotation significative des pinces l'une par rapport à l'autre autour de l'axe E-E' de la barre 152. Les pinces 28, 30 restent donc placées en regard l'une de l'autre, même inclinées l'une par rapport à l'autre.

Le dispositif mobile d'inspection 18 se déplace donc de manière efficace sur la ligne de production 16, en adoptant la conformation de la ligne de production 16. Ceci est obtenu par l'intermédiaire de moyens mécaniques simples et peu onéreux, qui ne nécessitent pas un pilotage actif et sophistiqué ou une maintenance importante. En particulier, aucune liaison rigide via une glissière ou autre n'existe entre les deux pinces 28, 30. Le dispositif mobile d'inspection 18 s'adapte naturellement à la courbure de la ligne de production 16, qui guide son déplacement.

Lorsque le dispositif mobile d'inspection 18 atteint la surface de l'étendue d'eau 12, sa flottabilité diminue.

La pression de serrage nominale appliquée sur la surface extérieure 22 de la ligne de production 16 est comprise généralement entre 2 bar et 90 bar, et comprise avantageusement entre 2 et 40 bar. De manière préférentielle, et afin que dispositif mobile d'inspection 18 puisse s'adapter et évoluer sur un grand nombre de lignes de production 16 différentes, notamment des conduites flexibles, tout en respectant les normes les plus conservatives, la pression de serrage nominale appliquée sur la surface extérieure 22 de la ligne de production 16 est comprise entre 10 bar et 40 bar.

L'effort de serrage appliqué par chaque pince 28, 30 est ainsi compris entre 20 kN et 1000 kN, préférentiellement entre 40 kN et 700 kN. En pratique, l'effort de serrage appliqué par chaque pince 28, 30 est avantageusement compris entre 50 kN et 200 kN, pour permettre l'inspection des conduites rigides et des ombilicaux, et avantageusement entre 130 kN et 700kN pour l'inspection aussi bien des conduites flexibles que des conduites rigides et des ombilicaux.

Ainsi, le dispositif mobile d'inspection 18 évolue facilement à l'interface entre l'étendue d'eau 12 et le volume d'air situé au-dessus de l'étendue d'eau 12, en l'absence partielle ou totale de flottabilité, en étant soumis aux mouvements locaux de la surface de l'étendue d'eau, notamment aux vagues et à la houle.

Le dispositif mobile d'inspection 18 se déplace ensuite au-dessus de la surface de l'étendue d'eau 12 pour inspecter la partie de la ligne de production 16 se raccordant à l'ensemble de surface 14. Ceci permet d'inspecter la partie haute de la ligne de production 16. Ceci est avantageux notamment pour les conduites flexibles, puisqu'il est possible d'inspecter la ligne de production 16 jusqu'au raidisseur, à l'intérieur des tubes de guidage en I ou en J. Ceci permet par exemple une inspection ultrasonore des fils d'armures jusque dans l'embout de la ligne de production 16.

Une telle inspection est possible grâce à la force de serrage optimisée de chaque pince 28, 30, permettant une accroche stable même sans flottabilité, avec un encombrement spatial et un poids relativement réduit par rapport un système de chenille. En outre, la pression de serrage appliquée reste appropriée pour ne pas dépasser les conditions de chargement sur la ligne de production 16, ni endommager la surface extérieure 22 de la ligne de production 16, notamment lorsque celle-ci est une conduite flexible.

Le dispositif mobile d'inspection 18 est donc particulièrement versatile, puisqu'il peut travailler dans l'étendue d'eau 12, à la surface de l'étendue d'eau 12, et dans un volume d'air situé au-dessus de l'étendue d'eau 12, sans qu'il soit nécessaire de prendre des précautions particulières, ou de manœuvrer spécifiquement le dispositif mobile d'inspection 18 à l'aide d'une grue ou d'autres équipements de surface. Aucune assistance externe n'est nécessaire depuis l'ensemble de surface 14, ce qui limite grandement les risques et le temps de préparation de l'installation 10.

Avantageusement, l'inspection de la ligne de production 16 à l'aide du dispositif mobile d'inspection 18 peut s'effectuer lors du transport de fluide à travers la ligne de production 16, notamment en production.

La tenue du dispositif mobile d'inspection 18 par les pinces 28, 30 garantit un positionnement très stable du support d'inspection 24, pour assurer des mesures très précises d'intégrité de la ligne de production 16 par l'intermédiaire des capteurs 25.

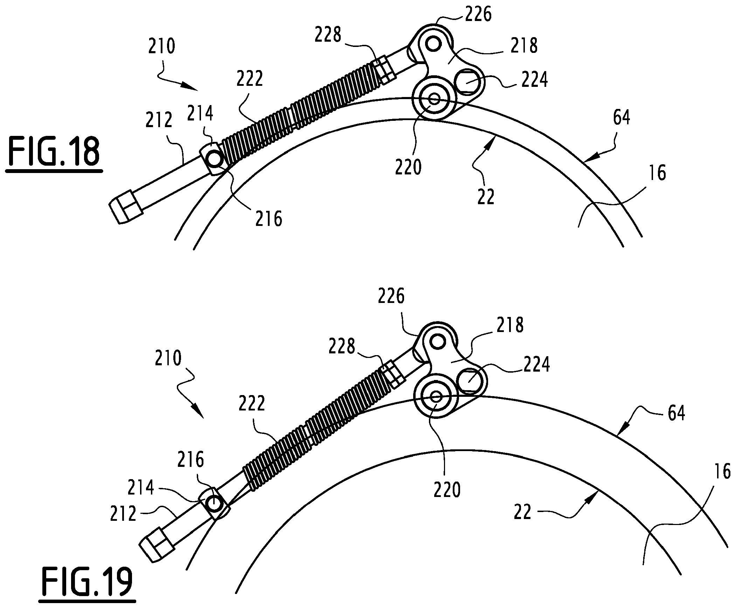

Dans une variante, la pince 28, 30 comporte un actionneur additionnel 210 de desserrage de la ceinture 64, visible sur les figures 18 et 19.

L'actionneur additionnel 210 comporte une tige d'ouverture 212, un support pivotant 214 d'articulation de la tige 212 en un premier point d'articulation 216 sur segment de cadre 72 ou 73 et un levier mobile 218, raccordé d'une part, sur la tige d'ouverture 212 et d'autre part, sur un pivot 220 solidaire d'un premier point de la ceinture 64.

L'actionneur additionnel 210 comprend en outre au moins un organe 222 de sollicitation élastique de la tige 212, pour ramener la ceinture de serrage 64 vers la configuration desserrée.

Le support pivotant 214 est monté rotatif autour d'un axe parallèle à l'axe B-B'. Il définit un passage transversal à son axe de rotation, dans lequel la tige 212 est montée coulissante. Ainsi, la tige 212 est propre à être entraînée en rotation conjointement avec le support pivotant 214. Elle est propre à coulisser transversalement par rapport au support coulissant 214 dans le passage transversal.

Le levier mobile 218 est monté pivotant autour d'un axe 224 fixe par rapport à un segment de cadre 72, 73, parallèle à l'axe B-B'.

Une extrémité 226 de la tige 212 est articulée d'un côté du levier 218 par rapport à l'axe de rotation 224. Le pivot 220 est articulé d'un autre côté du levier 218 par rapport à l'axe de rotation 224.

L'organe de sollicitation élastique 222 est monté autour de la tige 212. Il est interposé entre une surface du support 214 et une butée opposée 228 solidaire de la tige 212.

En configuration de serrage de la ceinture 64, tel qu'illustrée sur la figure 18, le pivot 220 est maintenu relativement rapproché de la surface extérieure 22 de la ligne de production 16. La ceinture 64 est alors rapprochée de la surface extérieure 22 de la ligne de production 16.

Dans cette configuration, l'extrémité 226 de la tige 212 est relativement plus proche du support 214 et la longueur de la tige 212 en saillie au-delà du support 214 est maximale.

L'organe de sollicitation élastique 222 est comprimé entre le support 214 et la butée 228.

Lors du desserrage de la ceinture 64, comme illustré par la figure 19, l'organe de sollicitation élastique 222 se déploie en poussant l'extrémité 226 de la tige 212 à l'écart de la surface extérieure 22 de la ligne de production 16. Ce déplacement provoque le coulissement de la tige 212 dans le support 214 pour diminuer la longueur de tige 212 en saillie au-delà du support 214.

Simultanément, le levier 218 est entraîné en rotation autour de l'axe 224, provoquant le déplacement du pivot 220 à l'écart de la surface extérieure 22 de la ligne de production 16. Ceci ouvre la ceinture 64.

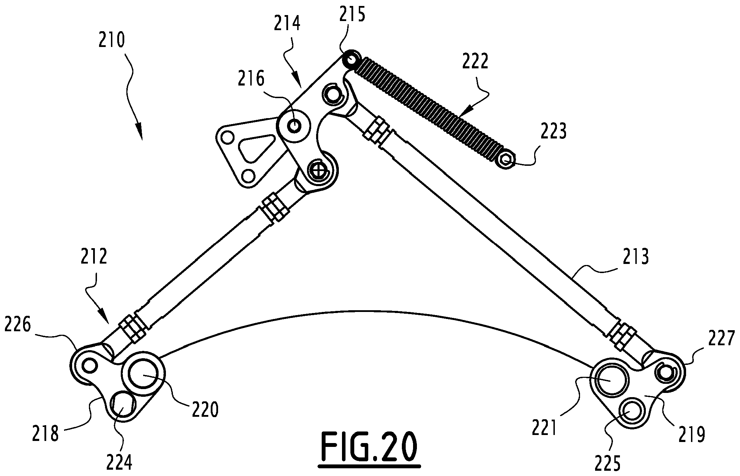

Une variante d'actionneur additionnel 210 est illustrée par la figure 20.

L'actionneur additionnel 210 illustré par la figure 20 diffère de celui représenté sur les figures 18 et 19 en ce que la tige 212 est articulée sur le support pivotant 214 sans coulisser par rapport à celui-ci. L'actionneur additionnel 210 comporte en outre une deuxième tige d'ouverture 213, le support pivotant 214 articulant également la deuxième tige d'ouverture 213 en le même premier point d'articulation 216 fixe par rapport à un segment de cadre 72, 73, parallèle à l'axe B-B' et un levier mobile 219, raccordé d'une part, sur la deuxième tige d'ouverture 213 et d'autre part, sur un pivot 221 solidaire d'un deuxième point de la ceinture 64.

Le levier mobile 219 est monté pivotant autour d'un axe 225 fixe par rapport à un segment de cadre 72, 73, parallèle à l'axe B-B'. Une extrémité 227 de la tige 217 est articulée d'un côté du levier 219 par rapport à l'axe de rotation 225. Le pivot 221 est articulé d'un autre côté du levier 219 par rapport à l'axe de rotation 225.

Le fonctionnement de la deuxième tige d'ouverture 213 est identique à celui de la première tige d'ouverture 212.

Dans une variante, la pince inférieure 30 est montée fixe par rapport au support d'inspection 24, et la pince supérieure 28 est montée mobile par rapport à la pince inférieure 30 par l'intermédiaire du mécanisme 50.

Dans une variante, le nombre de pinces 28, 30 est supérieur à deux.

Les pinces 28, 30 représentées sur les figures sont chacune démunies de dispositif de déplacement longitudinal le long de l'axe B-B', en particulier de chenille, situé dans la pince 28, 30, en particulier autour du passage central 63.

Dans encore une variante, l'ensemble 26 d'accrochage et de déplacement sur la ligne de production 16 comprend une pince 28 munie d'au moins trois chenilles, avantageusement cinq chenilles, préférentiellement sept chenilles. Chaque chenille se présente sous la forme d'un assemblage de maillons sur lesquels sont montés des patins de contact avec la ligne de production 16. Les patins de contact sont préférentiellement métalliques, par exemple en acier ou en aluminium, mais pourraient être réalisés en matériau composite. Chaque patin de contact comporte une surface de contact destinée à entrer en contact avec la ligne de production 16. La surface de contact peut être lisse, rugueuse ou encore striée.

Chaque chenille comporte une surface de contact interne avec la ligne de production 16, définissant le passage central 63 d'insertion de la ligne de production 16, d'axe B-B'. La surface de contact interne de chaque chenille est définie par l'ensemble des surfaces de contacts des patins de contact de la chenille qui sont orientés vers l'intérieur du passage central 63. La surface de contact interne des chenilles s'étend sur une longueur comprise avantageusement entre 0,6 m et 2 m, préférentiellement comprise entre 1 m et 1,4 m.

La pince 28 comprend une structure support. Pour chacune des chenilles, un châssis de renfort est monté de manière mobile sur la structure support, en particulier monté mobile radialement par rapport à l'axe B-B' de manière à pouvoir adapter l'écartement des chenilles au diamètre de la ligne de production 16. Le ou les châssis de renfort peuvent être entraînés dans leur mobilité au moyen d'un ou plusieurs vérins hydrauliques qui, en plus du déplacement radial des châssis de renfort, permettent également d'appliquer par l'intermédiaire des chenilles une pression de serrage radiale sur la ligne 16 telle que décrite, calculée ou encore mesurée précédemment.

Chaque châssis de renfort est configuré pour guider une chenille et comporte ainsi un ou plusieurs éléments de guidage sur lesquels se déplace la chenille. En particulier, le ou les éléments de guidage peuvent se présenter sous la forme de rouleaux montés mobiles en rotation sur un corps rigide. Ainsi, les maillons de la chenille roulent sur les rouleaux dans son déplacement autour du corps rigide du châssis de renfort. Chaque châssis de renfort peut également comporter un moyen de tension de la chenille se présentant sous la forme d'un ou plusieurs galets tendeurs.

Les chenilles sont chacune entraînées en rotation autour d'au moins une roue dentée motorisée, généralement montée libre en rotation sur le corps rigide du châssis de renfort, et dont les dents s'engagent avec les maillons de chaine. La motorisation de la roue dentée est assurée au moyen d'un moteur électrique ou hydraulique.

La pince comprend également un mécanisme d'ouverture permettant d'escamoter un nombre suffisant d'ensemble châssis de renfort et chenille de manière à permettre le passage de la ligne de production 16 d'une position située à l'extérieur au passage central 63 vers une position située à l'intérieur du passage central 63.

Pour que les mesures soient efficaces au niveau de la zone d'éclaboussement, le déplacement axial du dispositif mobile 18 sous l'effet de la houle est limité.

A cet effet, la chenille est rigide, par exemple en étant formée de maillons en acier. La pince à chenille est avantageusement munie d'un dispositif permettant le blocage en rotation des arbres moteur de la chenille, lorsque la chenille est à l'arrêt.

En variante, le dispositif 18 présente avantageusement un mécanisme 52 d'inclinaison des pinces 28, 30 dépourvu de barre de torsion 152. Le mécanisme 52 comporte par exemple une articulation entre les pinces 28, 30.

Par ailleurs, les pinces 28, 30 ne sont pas nécessairement aptes à appliquer une pression de serrage nominale comprise entre 2 bar et 90 bar sur la ligne de production 16.

Plus généralement, la pince 28, 30 selon l'invention peut s'appliquer à tout dispositif destiné à s'accrocher sur une ligne de production 16, tel qu'un dispositif de nettoyage de la ligne de production, ou encore un dispositif de chauffage local de la ligne de production.

## Revendications

1. Pince (28, 30) d'accrochage d'un dispositif (18) sur une ligne de production (16) au moins partiellement immergée dans une étendue d'eau (12), comprenant :

   - une pluralité de patins (62) de contact avec la ligne de production (16) définissant un passage central (63) d'insertion de la ligne de production (16) d'axe central (B-B'),
   - une ceinture (64) de serrage des patins (62) contre la ligne de production (16), propre à être manœuvrée entre une configuration desserrée désengagée de la ligne de production (16) et une configuration de serrage des patins (62) contre la ligne de production (16) ;
   - un actionneur (66) de serrage de la pince (28, 30), monté sur un premier point (74) de la pince (28, 30), l'actionneur (66) de serrage comportant un organe de saisie (112) d'un deuxième point (76) de la pince (28, 30), l'organe de saisie (112) étant mobile suivant un axe de déplacement entre une position déployée et une position rétractée rapprochant le deuxième point (76) du premier point (74),

   **caractérisée par** un mécanisme d'écartement (68) de l'organe de saisie (112) propre à déplacer l'axe de déplacement de l'organe de saisie (112) pour passer l'organe de saisie (112) entre une configuration écartée du deuxième point (76) dans la position déployée de l'organe de saisie (112) et une configuration de saisie du deuxième point (76) dans une position intermédiaire entre la position déployée et la position rétractée.

2. Pince (28, 30) selon la revendication 1, dans laquelle le mécanisme d'écartement (68) est propre à écarter radialement une extrémité libre de l'organe de saisie (112) de l'axe central (B-B') dans la configuration écartée, l'extrémité libre de l'organe de saisie (112) étant propre à se rapprocher de l'axe central (B-B') dans la configuration de saisie.

3. Pince (28, 30) selon l'une quelconque des revendications précédentes, dans laquelle le mécanisme d'écartement (68) comporte un organe de sollicitation élastique (124) de l'organe de saisie (112) vers la configuration de saisie.

4. Pince (28, 30) selon l'une quelconque des revendications précédentes, dans laquelle le mécanisme d'écartement (68) comporte un premier organe de coopération (120) par effet de came, déplaçable conjointement avec l'organe de saisie (112), le mécanisme d'écartement (68) comportant un deuxième organe de coopération (122) par effet de came monté fixe sur la pince (28,30), pour coopérer par effet de came avec le premier organe de coopération (120), lors du déplacement de l'organe de saisie (112) entre la position déployée et la position rétractée.

5. Pince (28, 30) selon l'une quelconque des revendications précédentes, dans laquelle la ceinture (64) de serrage comporte une première partie (102) raccordée au premier point (74), et une deuxième partie (104) mobile par rapport à la première partie (102), raccordée au deuxième point (76), le deuxième point (76) étant écarté de la première partie (102) dans la configuration desserrée, le deuxième point (76) étant rapproché de la première partie (102) dans la configuration de serrage.

**6.** Pince (28, 30) selon l'une quelconque des revendications précédentes, dans laquelle la ceinture (64) de serrage est manœuvrable entre la configuration desserrée et une configuration ouverte d'insertion de la ligne de production (16) dans la pince (28, 30), uniquement lorsque le mécanisme d'écartement (68) maintient l'organe de saisie (112) dans la configuration écartée.

**7.** Pince (28, 30) selon l'une quelconque des revendications précédentes, dans laquelle l'actionneur (66) comporte une chambre (110) de réception de l'organe de saisie (112), l'organe de saisie (112) étant déplaçable en translation dans la chambre (110) entre la position rétractée et la position déployée.

**8.** Pince (28, 30) selon l'une quelconque des revendications précédentes, dans laquelle l'actionneur (66) est monté rotatif au premier point (74) de la pince (28, 30), autour d'un axe de rotation (D-D'), le mécanisme d'écartement (68) étant propre à entraîner en rotation l'actionneur (66) autour de l'axe de rotation (D-D') pour faire passer l'organe de saisie (112) de la configuration écartée à la configuration de saisie.

**9.** Pince (28, 30) selon l'une quelconque des revendications précédentes, comportant un élément de poussée radiale (86) de chaque patin (62), propre à dégager le patin (62) de la ligne de production (16) lors du passage de la ceinture (64) de la configuration de serrage à la configuration desserrée, l'élément de poussée radiale (86) étant effaçable lors du passage de la ceinture (64) de la configuration desserrée à la configuration de serrage.

**10.** Pince (28, 30) selon l'une quelconque des revendications précédentes, dans laquelle l'élément de poussée radiale (86) comporte pour chaque patin (62), au moins un organe de roulage (96).

**11.** Pince (28, 30) selon l'une quelconque des revendications précédentes, dans laquelle chaque patin (62) comprend une mâchoire (80) définissant une surface de contact (88) avec la ligne de production (16) et au moins une entretoise (84) amovible disposée entre la ceinture (64) et la mâchoire (80) pour rapprocher radialement la mâchoire (80) de la ligne de production (16).

**12.** Pince (28, 30) selon l'une quelconque des revendications précédentes, comportant un actionneur additionnel (210) de desserrage de la ceinture de serrage (64).

**13.** Dispositif (18) mobile d'inspection d'une ligne de production (16) destinée à être immergée au moins partiellement dans une étendue d'eau (12), comportant :

- un support d'inspection (60) portant au moins un capteur (25) propre à se placer en regard de la ligne de production (16) ;
- un ensemble d'accrochage et de déplacement (26) sur la ligne de production (16), raccordé au support d'inspection (60), l'ensemble d'accrochage et de déplacement (26) comportant au moins deux pinces (28, 30) selon l'une quelconque des revendications précédentes, actionnables sélectivement pour enserrer la ligne de production (16),

les pinces (28, 30) étant mobiles longitudinalement l'une par rapport à l'autre le long de la ligne de production (16), l'ensemble d'accrochage et de déplacement (26) comprenant un mécanisme actif (50) de déplacement longitudinal des pinces (28, 30) l'une par rapport à l'autre.

**14.** Procédé d'inspection d'une ligne de production (16) partiellement immergée dans une étendue d'eau (12), comprenant les étapes suivantes :

- accrochage d'un dispositif (18) selon la revendication 13 sur la ligne de production (16) par l'intermédiaire de l'ensemble d'accrochage et de déplacement, l'étape d'accrochage comprenant l'insertion de la ligne de production (16) dans chaque pince (28, 30), le mécanisme d'écartement (68) de l'organe de saisie (112) maintenant l'organe de saisie (112) dans sa configuration écartée du deuxième point (76), puis le déplacement de l'organe de saisie (112) vers la position rétractée, le mécanisme d'écartement (68) passant l'organe de saisie (112) dans sa configuration de saisie du deuxième point (76) dans une position intermédiaire entre la position déployée et la position rétractée.
- déplacement du dispositif (18) dans l'étendue d'eau (12) jusqu'à au moins une position d'inspection par déplacement des pinces (28, 30) de l'ensemble d'accrochage et de déplacement (26),
- inspection de la ligne de production (16) par le ou chaque capteur (25).

**Patentansprüche**

1. Klemme (28, 30) zum Befestigen einer Vorrichtung (18) an einer Produktionsleitung (16), welche zumindest teilweise in einen Bereich mit Wasser (12) eingetaucht ist, welche aufweist:

   - eine Mehrzahl von Schuhen (62) für einen Kontakt mit der Produktionsleitung (16), welche einen zentralen Durchgang (63) zum Einführen der Produktionsleitung (16) mit einer zentralen Achse (B-B') definieren,
   - einen Gurt (64) zum Klemmen der Schuhe (62) gegen die Produktionsleitung (16), welcher imstande ist, zwischen einer Gelöst-Konfiguration, gelöst von der Produktionsleitung (16), und einer Konfiguration zum Klemmen der Schuhe (62) gegen die Produktionsleitung (16) betätigt zu werden,
   - einen Aktuator (66) zum Klemmen der Klemme (28, 30), welcher an einem ersten Punkt (74) der Klemme (28, 30) montiert ist, wobei der Aktuator (66) zum Klemmen ein Organ zum Greifen (112) eines zweiten Punkts (76) der Klemme (28, 30) aufweist, wobei das Organ zum Greifen (112) entlang einer Bewegungsachse zwischen einer Ausgefahren-Position und einer Eingefahren-Position, welche den zweiten Punkt (76) näher an den ersten Punkt (74) bringt, bewegbar ist,

   **gekennzeichnet durch** einen Mechanismus zum Auseinanderbewegen (68) des Organs zum Greifen (112), welcher imstande ist, die Bewegungsachse des Organs zum Greifen (112) zu bewegen, um das Organ zum Greifen (112) zwischen einer Auseinanderbewegt-Konfiguration des zweiten Punkts (76) in der Ausgefahren-Position des Organs zum Greifen (112) und einer Konfiguration des Greifens des zweiten Punkts (76) in einer Zwischenposition zwischen der Ausgefahren-Position und der Eingefahren-Position zu bewegen.

2. Klemme (28, 30) gemäß Anspruch 1, wobei der Mechanismus zum Auseinanderbewegen (68) imstande ist, ein freies Ende des Organs zum Greifen (112) von der zentralen Achse (B-B') in der Auseinanderbewegt-Konfiguration wegzubewegen, wobei das freie Ende des Organs zum Greifen (112) imstande ist, sich in der Konfiguration des Greifens der zentralen Achse (B-B') anzunähern.

3. Klemme (28, 30) gemäß irgendeinem der vorherigen Ansprüche, wobei der Mechanismus zum Auseinanderbewegen (68) ein Organ zum elastischen Vorspannen (124) des Organs zum Greifen (112) in die Konfiguration des Greifens aufweist.

4. Klemme (28, 30) gemäß irgendeinem der vorherigen Ansprüche, wobei der Mechanismus zum Auseinanderbewegen (68) ein erstes Organ zur Kooperation (120) mittels Nockeneffekts aufweist, welches gemeinsam mit dem Organ zum Greifen (112) bewegbar ist, wobei der Mechanismus zum Auseinanderbewegen (68) ein zweites Organ zur Kooperation (122) mittels Nockeneffekts aufweist, welches an der Klemme (28, 30) fest montiert ist, um mittels Nockeneffekts mit dem ersten Organ zur Kooperation (120) zu kooperieren, während des Bewegens des Organs zum Greifen (112) zwischen der Ausgefahren-Position und der Eingefahren-Position.

5. Klemme (28, 30) gemäß irgendeinem der vorherigen Ansprüche, wobei der Gurt (64) zum Klemmen einen ersten Abschnitt (102), welcher mit dem ersten Punkt (74) verbunden ist, und einen zweiten Abschnitt (104), welcher bezüglich des ersten Abschnitts (102) bewegbar ist und mit dem zweiten Punkt (76) verbunden ist, aufweist, wobei in der Gelöst-Konfiguration der zweite Punkt (76) vom ersten Abschnitt (102) wegbewegt ist, und wobei in der Konfiguration des Greifens der zweite Punkt (76) an den ersten Abschnitt (102) angenähert ist.

6. Klemme (28, 30) gemäß irgendeinem der vorherigen Ansprüche, wobei der Gurt (64) zum Klemmen zwischen der Gelöst-Konfiguration und einer Offen-Konfiguration zum Einführen der Produktionsleitung (16) in die Klemme (28, 30) betätigbar ist, ausschließlich wenn der Mechanismus zum Auseinanderbewegen (68) das Organ zum Greifen (112) in der Auseinanderbewegt-Konfiguration hält.

7. Klemme (28, 30) gemäß irgendeinem der vorherigen Ansprüche, wobei der Aktuator (66) eine Kammer (110) zum Aufnehmen des Organs zum Greifen (112) aufweist, wobei das Organ zum Greifen (112) in der Kammer (110) zwischen der Eingefahren-Position und der Ausgefahren-Position translatorisch bewegbar ist.

8. Klemme (28, 39) gemäß irgendeinem der vorherigen Ansprüche, wobei der Aktuator (66) am ersten Punkt (74) der Klemme (28, 30) drehbar um eine Drehachse (D-D') montiert ist, wobei der Mechanismus zum Auseinanderbewegen (68) imstande ist, den Aktuator (66) um die Drehachse (D-D') in Drehung zu versetzen, um das Organ zum Greifen (112) von der Auseinanderbewegt-Konfiguration in die Konfiguration des Greifens zu bewegen.

EP 3 542 072 B1

9. Klemme (28, 30) gemäß irgendeinem der vorherigen Ansprüche, welche ein Radiales-Drücken-Element (86) für jeden Schuh (62) aufweist, welches imstande ist, den Schuh (62) von der Produktionsleitung (16) zu lösen während des Bewegens des Gurts (64) von der Konfiguration zum Klemmen in die Gelöst-Konfiguration, wobei das Radiales-Drücken-Element (86) einfahrbar ist während des Bewegens des Gurts (64) von der Gelöst-Konfiguration in die Konfiguration zum Klemmen.

10. Klemme (28, 30) gemäß irgendeinem der vorherigen Ansprüche, wobei das Radiales-Drücken-Element (86) für jeden Schuh (62) mindestens ein Rollen-Organ (96) aufweist.

11. Klemme (28, 30) gemäß irgendeinem der vorherigen Ansprüche, wobei jeder Schuh (62) aufweist eine Backe (80), welche eine Kontaktfläche (88) mit der Produktionsleitung (16) definiert, und mindestens einen entfernbaren Abstandshalter (84), welcher zwischen dem Gurt (64) und der Backe (80) angeordnet ist, um die Backe (80) radial näher an die Produktionsleitung (16) zu bringen.

12. Klemme (28, 30) gemäß irgendeinem der vorherigen Ansprüche, welche einen zusätzlichen Aktuator (210) zum Lösen des Gurtes zum Klemmen (64) aufweist.

13. Mobile Vorrichtung (18) zur Inspektion einer Produktionsleitung (16), welche dazu bestimmt ist, zumindest teilweise in einen Bereich mit Wasser (12) eingetaucht zu sein, welche aufweist:

   - einen Inspektionsträger (60), welcher mindestens einen Sensor (25) trägt, welcher imstande ist, gegenüber der Produktionsleitung (16) angeordnet zu sein,
   - eine Anordnung zum Befestigen und Bewegen (26) an der Produktionsleitung (16), welche mit dem Inspektionsträger (60) verbunden ist, wobei die Anordnung zum Befestigen und Bewegen (26) mindestens zwei Klemmen (28, 30) gemäß irgendeinem der vorherigen Ansprüche aufweist, welche selektiv betätigbar sind, um die Produktionsleitung (16) zu klemmen,

   wobei die Klemmen (28, 30) bezüglich einander in Längsrichtung entlang der Produktionsleitung (16) bewegbar sind, wobei die Anordnung zum Befestigen und Bewegen (26) einen aktiven Mechanismus (50) zum Bewegen der Klemmen (28, 30) bezüglich einander in Längsrichtung aufweist.

14. Verfahren zur Inspektion einer Produktionsleitung (16), welche zumindest teilweise in einen Bereich mit Wasser (12) eingetaucht ist, welches die folgenden Schritte aufweist:

   - Befestigen einer Vorrichtung (18) gemäß Anspruch 13 an der Produktionsleitung (16) mittels der Anordnung zum Befestigen und Bewegen, wobei der Schritt des Befestigens aufweist das Einführen der Produktionsleitung (16) in jede Klemme (28, 30), wobei der Mechanismus zum Auseinanderbewegen (68) des Organs zum Greifen (112) das Organ zum Greifen (112) in seiner Auseinanderbewegt-Konfiguration des zweiten Punkts (76) hält, dann das Bewegen des Organs zum Greifen (112) in die Eingefahren-Position, wobei der Mechanismus zum Auseinanderbewegen (68) das Organ zum Greifen (112) in seine Konfiguration des Greifens des zweiten Punkts (76) in einer Zwischenposition zwischen der Ausgefahren-Position und der Eingefahren-Position bewegt,
   - Bewegen der Vorrichtung (18) im Bereich mit Wasser (12) bis zumindest einer Inspektionsposition mittels Bewegens der Klemmen (28, 30) der Anordnung zum Befestigen und Bewegen (26),
   - Inspizieren der Produktionsleitung (16) mittels des oder jedes Sensors (25).

**Claims**

1. A clamp (28, 30) of a device (18) on a production line (16) at least partially submerged in a body of water (12), comprising:

   - a plurality of contact pads (62) with the production line (16) defining a central passage (63) for insertion of the production line (16) with a central axis (B-B'),
   - a belt (64) for clamping the pads (62) against the production line (16), capable of being maneuvered between an unclamped configuration disengaged from the production line (16) and a configuration clamping the pads (62) against the production line (16);
   - a clamping actuator (66) for the clamp (28, 30), mounted on a first point (74) of the clamp (28, 30), the clamping actuator (66) having a grasping member (112) for a second point (76) of the clamp (28, 30), the grasping member (112) being movable along a travel axis between a deployed position and a retracted position bringing the second point (76) closer to the first point (74),

**characterized by** a spacing-apart mechanism (68) of the grasping member (112) able to move the travel axis of the grasping member (112) to move the grasping member (112) between a spaced-apart configuration of the second point (76) in the deployed position of the grasping member (112) and a clamping configuration of the second point (76) in an intermediate position between the deployed position and the retracted position.

2. The clamp (28, 30) according to claim 1, wherein the spacing-apart mechanism (68) is able to radially space apart a free end of the grasping member (112) from the central axis (B-B') in the spaced-apart configuration, the free end of the grasping member (112) being able to come closer to the central axis (B-B') in the clamping configuration.

3. The clamp (28, 30) according to any one of the preceding claims, wherein the spacing-apart mechanism (68) includes a member (124) for elastically biasing the grasping member (112) toward the clamping configuration.

4. The clamp (28, 30) according to any one of the preceding claims, wherein the spacing-apart mechanism (68) includes a first member (120) for cooperating by cam effect, movable jointly with the grasping member (112), the spacing-apart mechanism (68) including a second member (122) for cooperating by cam effect mounted stationary on the clamp (28, 30), for cooperating by cam effect with the first cooperating member (120), during the movement of the grasping member (112) between the deployed position and the retracted position.

5. The clamp (28, 30) according to any one of the preceding claims, wherein the clamping belt (64) includes a first part (102) connected to the first point (74), and a second part (104) movable relative to the first part (102), connected to the second point (76), the second point (76) here being separated from the first part (102) in the unclamped configuration, the second point (76) being closer to the first part (102) in the clamping configuration.

6. The clamp (28, 30) according to any one of the preceding claims, wherein the clamping belt (64) is able to be maneuvered between the unclamped configuration and an open configuration for insertion of the production line (16) into the clamp (28, 30), only when the spacing-apart mechanism (68) keeps the grasping member (112) in the spaced-apart configuration.

7. The clamp (28, 30) according to any one of the preceding claims, wherein the actuator (66) includes a chamber (110) for receiving the grasping member (112), the grasping member (112) being translatable in the chamber (110) between the retracted position and the deployed position.

8. The clamp (28, 30) according to any one of the preceding claims, wherein the actuator (66) is mounted rotating at the first point (74) of the clamp (28, 30), about a rotation axis (D-D'), the spacing-apart mechanism (68) being able to rotate the actuator (66) about the rotation axis (D-D') to move the grasping member (112) from the spaced-apart configuration to the clamping configuration.

9. The clamp (28, 30) according to any one of the preceding claims, including a radial push element (86) of each pad (62), able to free the pad (62) from the production line (16) when the belt (64) goes from the clamping configuration to the unclamped configuration, the radial push element (86) being retractable when the belt (64) moves from the unclamped configuration to the clamping configuration.

10. The clamp (28, 30) according to any one of the preceding claims, wherein the radial push element (86) includes, for each pad (62), at least one rolling member (96).

11. The clamp (28, 30) according to any one of the preceding claims, wherein each pad (62) comprises a jaw (80) defining a contact surface (88) with the production line (16) and at least one removable spacer (84) arranged between the belt (64) and the jaw (80) to bring the jaw (80) radially closer to the production line (16).

12. The clamp (28, 30) according to any one of the preceding claims, including an additional actuator (210) for unclamping the clamping belt (64).

13. A mobile device (18) for inspecting a production line (16) intended to be at least partially submerged in a body of water (12), including:

- an inspection support (60) bearing at least one sensor (25) capable of being positioned facing the production line (16);
- a catching and traveling assembly (26) for catching onto and traveling along the production line (16), connected to the inspection support (60), the catching and traveling assembly (26) including at least two clamps (28, 30) according to any one of the preceding claims, able to be actuated selectively to grasp the production line (16),

the clamps (28, 30) being longitudinally movable relative to one another along the production line (16), the catching and traveling assembly (26) comprising an active mechanism (50) for moving the clamps (28, 30) longitudinally relative to one another.

14. A method for inspecting a production line (16) partially submerged in a body of water (12), comprising the following steps:

- catching a device (18) according to claim 13 on the production line (16) via the catching and traveling assembly, the catching step comprising the insertion of the production line (16) in each clamp (28, 30), the spacing-apart mechanism (68) of the grasping member (112) keeping the grasping member (112) in its configuration spaced apart from the second point (76), then the movement of the grasping member (112) toward the retracted position, the sparing-apart mechanism (68) moving the grasping member (112) into its configuration grasping the second point (76) in a position midway between the deployed position and the retracted position.
- moving the device (18) in the body of water (12) up to at least one inspection position by moving clamps (28, 30) of the catching and traveling assembly (26),
- inspecting the production line (16) using the or each sensor (25).

**FIG.1**

EP 3 542 072 B1

-12-

FIG.3

FIG.2

FIG.5

FIG.4

E

154
156
162
150
52
158
160
152
164
164

**FIG.6**

E'

26

150
156
52
158

**FIG.7**

24
16
23
P1
26
28
152
52
30
18
P2

**FIG.8**

EP 3 542 072 B1

EP 3 542 072 B1

**FIG.9**

**FIG.10**

FIG.12

FIG.11

B

62    86    104    62    63    82    80    76    114

72    64    100    102    120    68    122    112    128    74    66    110

B'

FIG.13

EP 3 542 072 B1

FIG.15

FIG.14

EP 3 542 072 B1

FIG.16

FIG.17

31

EP 3 542 072 B1

FIG.18

FIG.19

FIG.20

**EP 3 542 072 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2010105003 A **[0016] [0018] [0020]**
- US 4832530 A **[0021]**
- FR 3031186 **[0050]**

**Littérature non-brevet citée dans la description**

- API 17J. American Petroleum Institute (API), 01 Janvier 2009 **[0003] [0037]**
- API RP 17B. 2002 **[0003]**
- API RP 17B. Mars 2002 **[0037]**
- API 17. American Petroleum Institute (API), Avril 2011 **[0038]**